# EUROPEAN PATENT APPLICATION

(11) **EP 4 545 321 A1**
(43) Date of publication of application: **30.04.2025**
(21) Application number: 22952437.6
(22) Date of filing: 29.07.2022
(51) Int. Cl.: B60H 1/00, B60H 1/22

(54) **AIR CONDITIONING SYSTEM, VEHICLE AND REFRIGERATION DEVICE**

(71) Applicant: Shenzhen Yinwang Intelligent Technologies Co., Ltd., Shenzhen, Guangdong 518129 (CN)
(72) Inventor: YU, Dengjia, Shenzhen, Guangdong 518129 (CN); LI, Siyang, Shenzhen, Guangdong 518129 (CN); LIU, Dan, Shenzhen, Guangdong 518129 (CN); WANG, Longyi, Shenzhen, Guangdong 518129 (CN)
(74) Representative: Pfenning, Meinig & Partner mbB
(86) International application number: PCT/CN2022/108822
(87) International publication number: WO 2024/020982

(57) **Abstract**

An air conditioning system, a vehicle, and a refrigeration apparatus are provided, to resolve a problem in a conventional technology that a temperature of each area cannot be independently and accurately controlled. The air conditioning system includes a first refrigeration component, a second refrigeration component, a first heating component, a second heating component, a first control valve, and a second control valve. The first control valve is configured to control cooling performed by the first refrigeration component and the second refrigeration component. The second control valve is configured to control heating performed by the first heating component and the second heating component. The air conditioning system includes a first area and a second area, the first area includes the first refrigeration component and the first heating component, the second area includes the second refrigeration component and the second heating component, and a partition plate is disposed between the first area and the second area. The first area and the second area are separated by using the partition plate, so that temperatures of the first area and the second area of the air conditioning system can be accurately controlled by using the first control valve and the second control valve. In addition, there is no need to be cooled together and then be separately heated, so that energy consumption of the air conditioning system can be reduced.

## Description

### TECHNICAL FIELD

This application relates to the field of air conditioning technologies, and in particular, to an air conditioning system, a vehicle, and a refrigeration apparatus.

### BACKGROUND

With the development of automobile technologies, people have an increasingly high requirement for comfort of a vehicle. A heating ventilation and air conditioning (heating ventilation and air conditioning, HVAC) (which may be briefly referred to as air conditioning) system is one of mainstream configurations of the vehicle, and provides a comfortable traveling environment for drivers and passengers. Currently, most vehicles use a single-zone air conditioning system. The system can improve comfort of the traveling environment, but different drivers and passengers may have different temperature requirements. As a result, the single-zone air conditioning system cannot meet personalized requirements of different drivers and passengers for the comfort of the environment. To resolve the technical problem, a dual-zone air conditioning system is provided. The single-zone air conditioning system means that there is one temperature adjustment area in the air conditioning system, and the dual-zone air conditioning system means that there are two temperature adjustment areas in the air conditioning system.

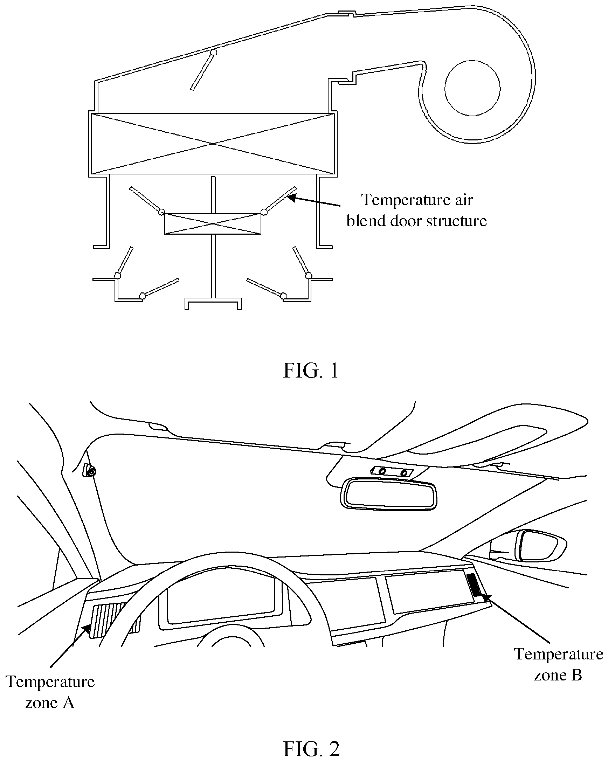

FIG. 1 is a diagram of a structure of a dual-zone air conditioning system in a conventional technology. The air conditioning system in FIG. 1 adjusts a dual temperature zone through a temperature air door based-air mixing structure. However, due to uneven distribution of an air volume in the temperature air door based-air mixing structure, control accuracy of the dual temperature zone is relatively poor, a temperature of each temperature zone among the dual temperature zone cannot be independently controlled, and the like.

In conclusion, how to accurately and independently control the temperature of each temperature zone in the air conditioning system is a technical problem urgent to be resolved currently.

### SUMMARY

This application provides an air conditioning system, a vehicle, and a refrigeration apparatus, which are configured to accurately and independently control a temperature of each area of the air conditioning system.

According to a first aspect, this application provides an air conditioning system. The air conditioning system includes a first refrigeration component, a second refrigeration component, a first heating component, a second heating component, a first control valve, and a second control valve. The first control valve is configured to control cooling performed by the first refrigeration component and the second refrigeration component. The second control valve is configured to control heating performed by the first heating component and the second heating component. The air conditioning system includes a first area and a second area. The first area includes the first refrigeration component and the first heating component, the second area includes the second refrigeration component and the second heating component, and a partition plate is disposed between the first area and the second area.

Based on the foregoing solution, the first refrigeration component and the second refrigeration component may be independently controlled by using the first control valve, the first heating component and the second heating component may be independently controlled by using the second control valve, and there is no need to be cooled together and then be separately heated. In this way, energy consumption can be reduced. In addition, the first area and the second area can be separated by using the partition plate, so that temperatures of the first area and the second area of the air conditioning system can be accurately controlled by using the first control valve and the second control valve.

In a possible implementation, the first refrigeration component and the second refrigeration component are integrated, and/or the first heating component and the second heating component are integrated.

Structures of the refrigeration component and the heating component may be more compact by using the first refrigeration component and the second refrigeration component that are integrated and/or the first heating component and the second heating component that are integrated. In this case, miniaturization of the air conditioning system is facilitated, and assembly steps (or referred to as a process) of the air conditioning system can be simplified.

In a possible implementation, the first refrigeration component and the second refrigeration component that are integrated and the first heating component and the second heating component that are integrated are arranged side by side.

A side-by-side arrangement helps further reduce a volume of the air conditioning system.

In a possible implementation, the air conditioning system includes the first refrigeration component, the second refrigeration component, the first heating component, and the second heating component. Based on this, an operating mode of the air conditioning system includes any one of the following: both the first refrigeration component and the second refrigeration component are in a cooling state, and both the first heating component and the second heating component are in an off state; both the first refrigeration component and the second refrigeration component are in an off state, and both the first heating component and the second heating component are in a heating state; both the first refrigeration component and the second refrigeration component are in a cooling state, and both the first heating component and the second heating component are in a heating state; the first refrigeration component is in a cooling state, the second refrigeration component is in an off state, the first heating component is in an off state, and the second heating component is in a heating state; the first refrigeration component is in an off state, the second refrigeration component is in a cooling state, the first heating component is in a heating state, and the second heating component is in an off state; both the first refrigeration component and the second refrigeration component are in a cooling state, the first heating component is in an off state, and the second heating component is in a heating state; both the first refrigeration component and the second refrigeration component are in a cooling state, the first heating component is in a heating state, and the second heating component is in an off state; the first refrigeration component is in a cooling state, the second refrigeration component is in an off state, and both the first heating component and the second heating component are in an off state; the first refrigeration component is in an off state, the second refrigeration component is in a cooling state, and both the first heating component and the second heating component are in an off state; both the first refrigeration component and the second refrigeration component are in an off state, the first heating component is in a heating state, and the second heating component is in an off state; or both the first refrigeration component and the second refrigeration component are in an off state, the first heating component is in an off state, and the second heating component is in a heating state.

On states or off states of the first refrigeration component, the second refrigeration component, the first heating component, and the second heating component are independently controlled. In this way, any function of cooling, heating, heating and dehumidification, or turn-off can be implemented in the first area and the second area of the air conditioning system.

In a possible implementation, the first control valve includes a first expansion valve and a second expansion valve. A first port of the first expansion valve is connected to the first refrigeration component, a second port of the first expansion valve is connected to a cold source, a first port of the second expansion valve is connected to the second refrigeration component, and a second port of the second expansion valve is configured to connect to the cold source.

Enabling or disabling of a refrigeration function of the first refrigeration component and strength of a refrigeration capability of the first refrigeration component may be controlled by using the first expansion valve. Enabling or disabling of a refrigeration function of the second refrigeration component and strength of a refrigeration capability of the second refrigeration component may be controlled by using the second expansion valve. In addition, the first refrigeration component and the second refrigeration component may be connected to a same cold source by using the first expansion valve and the second expansion valve. This helps simplify an architecture of the air conditioning system compared with a conventional technology in which different cold sources are used.

In a possible implementation, the second control valve includes a first flow valve and a second flow valve. A first port of the first flow valve is connected to the first heating component, a second port of the first flow valve is configured to connect to a heat source, a first port of the second flow valve is connected to the second heating component, and a second port of the second flow valve is configured to connect to the heat source.

Enabling or disabling of a heating function of the first heating component and strength of a heating capability of the first heating component may be controlled by using the first flow valve. Enabling or disabling of a heating function of the second heating component and strength of a heating capability of the second heating component may be controlled by using the second flow valve. In addition, the first heating component and the second heating component may be connected to a same heat source by using the first flow valve and the second flow valve. This helps simplify the architecture of the air conditioning system compared with a conventional technology in which different heat sources are used, thereby helping further reduce the volume of the air conditioning system.

In a possible implementation, the first control valve includes a first three-way valve. A first port of the first three-way valve is connected to the first refrigeration component, a second port of the first three-way valve is connected to the second refrigeration component, and a third port of the first three-way valve is configured to connect to the cold source.

The enabling or disabling of the refrigeration functions of the first refrigeration component and the second refrigeration component and distribution of a refrigeration amount to the first refrigeration component and the second refrigeration component may be controlled by using the first three-way valve. Therefore, the architecture of the air conditioning system can be simplified. This helps further reduce the volume of the air conditioning system.

In a possible implementation, the second control valve includes a second three-way valve. A first port of the second three-way valve is connected to the first heating component, a second port of the second three-way valve is connected to the second heating component, and a third port of the second three-way valve is connected to a heat source.

The enabling or disabling of the heating functions of the first heating component and the second heating component and distribution of a heating amount to the first heating component and the second heating component may be controlled by using the second three-way valve. Therefore, the architecture of the air conditioning system can be simplified. This helps further reduce the volume of the air conditioning system.

In a possible implementation, the first refrigeration component includes a first inlet, a first outlet, and at least one first duct, where one end of the first duct is connected to the first inlet, and the other end of the first duct is connected to the first outlet. The second refrigeration component includes a second inlet, a second outlet, and at least one second duct, where one end of the second duct is connected to the second inlet, and the other end of the second duct is connected to the second outlet.

Based on the first refrigeration component, a first heat transfer medium flows into the first duct through the first inlet, and flows out from the first outlet, to implement flowing of the first heat transfer medium in the first refrigeration component, so that passing air can be cooled by the first refrigeration component. A second heat transfer medium flows into the second duct through the second inlet, and flows out from the second outlet, to implement flowing of the second heat transfer medium in the second refrigeration component, so that passing air can be cooled by the second refrigeration component.

In a possible implementation, the first heating component includes a third inlet, a third outlet, and at least one third duct. One end of the third duct is connected to the third inlet, and the other end of the third duct is connected to the third outlet. The second heating component includes a fourth inlet, a fourth outlet, and at least one fourth duct. One end of the fourth duct is connected to the fourth inlet, and the other end of the fourth duct is connected to the fourth outlet.

Based on the first heating component, a third heat transfer medium flows into the third duct through the third inlet, and flows out from the third outlet, to implement flowing of the third heat transfer medium in the first heating component, so that passing air can be heated by the first heating component. A fourth heat transfer medium flows into the fourth duct through the fourth inlet, and flows out from the fourth outlet, to implement flowing of the fourth heat transfer medium in the second heating component, so that passing air can be heated by the second heating component.

In a possible implementation, the first area further includes a first blower, and the second area further includes a second blower. The first blower is configured to adjust an air volume of the first area; and the second blower is configured to adjust an air volume of the second area.

The air volume (or referred to as an air exhaust volume) of the first area may be independently adjusted by using the first blower, and the air volume of the second area may be independently adjusted by using the second blower. In addition, the air exhaust volume of the first area and the air exhaust volume of the second area are not affected by a difference between air resistance of the two areas.

In a possible implementation, the first refrigeration component is located between the first blower and the first heating component; and/or the second refrigeration component is located between the second blower and the second heating component.

The first refrigeration component is disposed between the first blower and the first heating component, so that the first area of the air conditioning system can operate in the heating and dehumidification mode. The second refrigeration component is disposed between the second blower and the second heating component, so that the second area of the air conditioning system can operate in the heating and dehumidification mode.

In a possible implementation, the air conditioning system includes the first blower, the second blower, the first refrigeration component, the second refrigeration component, the first heating component, and the second heating component. Based on this, the operating mode of the air conditioning system includes any one of the following: both the first blower and the second blower are in an on state, both the first refrigeration component and the second refrigeration component are in a cooling state, and both the first heating component and the second heating component are in an off state; both the first blower and the second blower are in an on state, both the first refrigeration component and the second refrigeration component are in an off state, and both the first heating component and the second heating component are in a heating state; both the first blower and the second blower are in an on state, both the first refrigeration component and the second refrigeration component are in a cooling state, and both the first heating component and the second heating component are in a heating state; both the first blower and the second blower are in an on state, both the first refrigeration component and the second refrigeration component are in an off state, and the first heating component and the second heating component are in an off state; both the first blower and the second blower are in an on state, the first refrigeration component is in a cooling state, the second refrigeration component is in an off state, the first heating component is in an off state, and the second heating component is in a heating state; both the first blower and the second blower are in an on state, the first refrigeration component is in an off state, the second refrigeration component is in a cooling state, the first heating component is in a heating state, and the second heating component is in an off state; both the first blower and the second blower are in an on state, both the first refrigeration component and the second refrigeration component are in a cooling state, the first heating component is in an off state, and the second heating component is in a heating state; both the first blower and the second blower are in an on state, both the first refrigeration component and the second refrigeration component are in a cooling state, the first heating component is in a heating state, and the second heating component is in an off state; the first blower is in an on state, the second blower is in an off state, the first refrigeration component is in a cooling state, the second refrigeration component is in an off state, and both the first heating component and the second heating component are in an off state; the first blower is in an off state, the second blower is in an on state, the first refrigeration component is in an off state, the second refrigeration component is in a cooling state, and both the first heating component and the second heating component are in an off state; the first blower is in an on state, the second blower is in an off state, both the first refrigeration component and the second refrigeration component are in an off state, the first heating component is in a heating state, and the second heating component is in an off state; or the first blower is in an off state, the second blower is in an on state, both the first refrigeration component and the second refrigeration component are in an off state, the first heating component is in an off state, and the second heating component is in a heating state.

On or off of the first refrigeration component, the second refrigeration component, the first heating component, and the second heating component are independently controlled. In this way, any function of cooling, heating, heating and dehumidification, ventilation or turn-off can be implemented in the first area and the second area of the air conditioning system.

According to a second aspect, this application provides an air conditioning system. The air conditioning system includes a first refrigeration component, a second refrigeration component, a first heating component, and a second heating component. The first refrigeration component and the second refrigeration component are integrated, and/or the first heating component and the second heating component are integrated. A first area includes the first refrigeration component and the first heating component, a second area includes the second refrigeration component and the second heating component, and a partition plate is disposed between the first area and the second area.

Based on the foregoing solution, the first area and the second area may be separated by using the partition plate. Structures of the refrigeration component and the heating component may be more compact by using the first refrigeration component and the second refrigeration component that are integrated and/or the first heating component and the second heating component that are integrated. In this case, miniaturization of the air conditioning system is facilitated, and an assembly process of the air conditioning system can be simplified.

In a possible implementation, the first refrigeration component and the second refrigeration component that are integrated and the first heating component and the second heating component that are integrated are arranged side by side.

In a possible implementation, the air conditioning system further includes a first control valve and a second control valve. The first control valve is configured to control cooling performed by the first refrigeration component and the second refrigeration component. The second control valve is configured to control heating performed by the first heating component and the second heating component.

The first refrigeration component and the second refrigeration component may be independently controlled by using the first control valve, the first heating component and the second heating component may be independently controlled by using the second control valve, and there is no need to be cooled together and then be separately heated. In this way, energy consumption can be reduced. In addition, temperatures of the first area and the second area of the air conditioning system can be accurately controlled by using the first control valve and the second control valve.

In a possible implementation, the air conditioning system includes the first refrigeration component, the second refrigeration component, the first heating component, and the second heating component. Based on this, an operating mode of the air conditioning system includes any one of the following: both the first refrigeration component and the second refrigeration component are in a cooling state, and both the first heating component and the second heating component are in an off state; both the first refrigeration component and the second refrigeration component are in an off state, and both the first heating component and the second heating component are in a heating state; both the first refrigeration component and the second refrigeration component are in a cooling state, and both the first heating component and the second heating component are in a heating state; the first refrigeration component is in a cooling state, the second refrigeration component is in an off state, the first heating component is in an off state, and the second heating component is in a heating state; the first refrigeration component is in an off state, the second refrigeration component is in a cooling state, the first heating component is in a heating state, and the second heating component is in an off state; both the first refrigeration component and the second refrigeration component are in a cooling state, the first heating component is in an off state, and the second heating component is in a heating state; both the first refrigeration component and the second refrigeration component are in a cooling state, the first heating component is in a heating state, and the second heating component is in an off state; the first refrigeration component is in a cooling state, the second refrigeration component is in an off state, and both the first heating component and the second heating component are in an off state; the first refrigeration component is in an off state, the second refrigeration component is in a cooling state, and both the first heating component and the second heating component are in an off state; both the first refrigeration component and the second refrigeration component are in an off state, the first heating component is in a heating state, and the second heating component is in an off state; or both the first refrigeration component and the second refrigeration component are in an off state, the first heating component is in an off state, and the second heating component is in a heating state.

In a possible implementation, the first control valve includes a first expansion valve and a second expansion valve. A first port of the first expansion valve is connected to the first refrigeration component, a second port of the first expansion valve is connected to a cold source, a first port of the second expansion valve is connected to the second refrigeration component, and a second port of the second expansion valve is configured to connect to the cold source.

In a possible implementation, the second control valve includes a first flow valve and a second flow valve. A first port of the first flow valve is connected to the first heating component, a second port of the first flow valve is configured to connect to a heat source, a first port of the second flow valve is connected to the second heating component, and a second port of the second flow valve is configured to connect to the heat source.

Enabling or disabling of a heating function of the first heating component and strength of a heating capability of the first heating component may be controlled by using the first flow valve. Enabling or disabling of a heating function of the second heating component and strength of a heating capability of the second heating component may be controlled by using the second flow valve. In addition, the first heating component and the second heating component may be connected to a same heat source by using the first flow valve and the second flow valve. This helps simplify the architecture of the air conditioning system compared with a conventional technology in which different heat sources are used, thereby helping further reduce the volume of the air conditioning system.

In a possible implementation, the first control valve includes a first three-way valve. A first port of the first three-way valve is connected to the first refrigeration component, a second port of the first three-way valve is connected to the second refrigeration component, and a third port of the first three-way valve is configured to connect to the cold source.

In a possible implementation, the second control valve includes a second three-way valve. A first port of the second three-way valve is connected to the first heating component, a second port of the second three-way valve is connected to the second heating component, and a third port of the second three-way valve is connected to a heat source.

In a possible implementation, the first refrigeration component includes a first inlet, a first outlet, and at least one first duct, where one end of the first duct is connected to the first inlet, and the other end of the first duct is connected to the first outlet. The second refrigeration component includes a second inlet, a second outlet, and at least one second duct, where one end of the second duct is connected to the second inlet, and the other end of the second duct is connected to the second outlet.

In a possible implementation, the first heating component includes a third inlet, a third outlet, and at least one third duct. One end of the third duct is connected to the third inlet, and the other end of the third duct is connected to the third outlet. The second heating component includes a fourth inlet, a fourth outlet, and at least one fourth duct. One end of the fourth duct is connected to the fourth inlet, and the other end of the fourth duct is connected to the fourth outlet.

In a possible implementation, the first area further includes a first blower, and the second area further includes a second blower. The first blower is configured to adjust an air volume of the first area; and the second blower is configured to adjust an air volume of the second area.

In a possible implementation, the first refrigeration component is located between the first blower and the first heating component; and/or the second refrigeration component is located between the second blower and the second heating component.

In a possible implementation, the air conditioning system includes the first blower, the second blower, the first refrigeration component, the second refrigeration component, the first heating component, and the second heating component. Based on this, the operating mode of the air conditioning system includes any one of the following: both the first blower and the second blower are in an on state, both the first refrigeration component and the second refrigeration component are in a cooling state, and both the first heating component and the second heating component are in an off state; both the first blower and the second blower are in an on state, both the first refrigeration component and the second refrigeration component are in an off state, and both the first heating component and the second heating component are in a heating state; both the first blower and the second blower are in an on state, both the first refrigeration component and the second refrigeration component are in a cooling state, and both the first heating component and the second heating component are in a heating state; both the first blower and the second blower are in an on state, both the first refrigeration component and the second refrigeration component are in an off state, and the first heating component and the second heating component are in an off state; both the first blower and the second blower are in an on state, the first refrigeration component is in a cooling state, the second refrigeration component is in an off state, the first heating component is in an off state, and the second heating component is in a heating state; both the first blower and the second blower are in an on state, the first refrigeration component is in an off state, the second refrigeration component is in a cooling state, the first heating component is in a heating state, and the second heating component is in an off state; both the first blower and the second blower are in an on state, both the first refrigeration component and the second refrigeration component are in a cooling state, the first heating component is in an off state, and the second heating component is in a heating state; both the first blower and the second blower are in an on state, both the first refrigeration component and the second refrigeration component are in a cooling state, the first heating component is in a heating state, and the second heating component is in an off state; the first blower is in an on state, the second blower is in an off state, the first refrigeration component is in a cooling state, the second refrigeration component is in an off state, and both the first heating component and the second heating component are in an off state; the first blower is in an off state, the second blower is in an on state, the first refrigeration component is in an off state, the second refrigeration component is in a cooling state, and both the first heating component and the second heating component are in an off state; the first blower is in an on state, the second blower is in an off state, both the first refrigeration component and the second refrigeration component are in an off state, the first heating component is in a heating state, and the second heating component is in an off state; or the first blower is in an off state, the second blower is in an on state, both the first refrigeration component and the second refrigeration component are in an off state, the first heating component is in an off state, and the second heating component is in a heating state.

According to a third aspect, this application provides a vehicle. The vehicle includes a control system and the air conditioning system according to any one of the first aspect or the possible implementations of the first aspect. Alternatively, the vehicle includes a control system and the air conditioning system according to any one of the second aspect or the possible implementations of the second aspect. The control system is configured to control running of the air conditioning system.

For technical effects that can be achieved in the second aspect or the third aspect, refer to descriptions of beneficial effects in the first aspect. Details are not described herein again.

According to a fourth aspect, this application provides a refrigeration apparatus. The refrigeration apparatus includes a first refrigeration component and a second refrigeration component that are integrated. The first refrigeration component includes a first inlet, a first outlet, and at least one first duct. One end of the first duct is connected to the first inlet, and the other end of the first duct is connected to the first outlet. The second refrigeration component includes a second inlet, a second outlet, and at least one second duct. One end of the second duct is connected to the second inlet, and the other end of the second duct is connected to the second outlet.

Based on the first refrigeration component, a first heat transfer medium may flow into the first duct through the first inlet, and flow out from the first outlet, to implement flowing of the first heat transfer medium in the first refrigeration component, so that passing air can be cooled by the first refrigeration component. A second heat transfer medium may flow into the second duct through the second inlet, and flow out from the second outlet, to implement flowing of the second heat transfer medium in the second refrigeration component, so that passing air can be cooled by the second refrigeration component.

In a possible implementation, the first inlet is embedded in the second inlet, and the first inlet is isolated from the second inlet, and/or the first outlet is embedded in the second outlet, and the first outlet is isolated from the second outlet.

The first inlet is embedded in the second inlet, and/or the first outlet is embedded in the second outlet. This helps reduce a volume of the refrigeration apparatus. The first inlet is isolated from the second inlet, and the first outlet is isolated from the second outlet, so that the first refrigeration component and the second refrigeration component can independently operate.

In a possible implementation, the first refrigeration component includes a plurality of first ducts, and the plurality of first ducts are arranged in parallel; and/or the second refrigeration component includes a plurality of second ducts, and the plurality of second ducts are arranged in parallel.

A structure of the first refrigeration component may be more compact by using the first ducts arranged in parallel and side by side, and/or a structure of the second refrigeration component may be more compact by using the second ducts arranged in parallel and side by side.

According to a fifth aspect, this application provides a heating apparatus. The heating apparatus includes a first heating component and a second heating component that are integrated. The first heating component includes a third inlet, a third outlet, and at least one third duct. One end of the third duct is connected to the third inlet, and the other end of the third duct is connected to the third outlet. The second heating component includes a fourth inlet, a fourth outlet, and at least one fourth duct. One end of the fourth duct is connected to the fourth inlet, and the other end of the fourth duct is connected to the fourth outlet.

Based on the first heating component, a third heat transfer medium may flow into the third duct through the third inlet, and flow out from the third outlet, to implement flowing of the third heat transfer medium in the first heating component, so that passing air can be heated by the first heating component. A fourth heat transfer medium may flow into the fourth duct through the fourth inlet, and flow out from the fourth outlet, to implement flowing of the fourth heat transfer medium in the second heating component, so that passing air can be heated by the second heating component.

In a possible implementation, the third inlet is embedded in the fourth inlet, and the third inlet is isolated from the fourth inlet, and/or the third outlet is embedded in the fourth outlet, and the third outlet is isolated from the fourth outlet.

The third inlet is embedded in the fourth inlet and/or the third outlet is embedded in the fourth outlet. This helps reduce a volume of the heating apparatus. The third inlet is isolated from the fourth inlet, and the third outlet is isolated from the fourth outlet, so that the first heating component and the second heating component can independently operate.

In a possible implementation, the first heating component includes a plurality of third ducts, and the plurality of third ducts are arranged in parallel; and/or the second heating component includes a plurality of fourth ducts, and the plurality of fourth ducts are arranged in parallel.

A structure of the first heating component may be more compact by using the third ducts arranged in parallel and side by side, and/or a structure of the second heating component may be more compact by using the fourth ducts arranged in parallel and side by side.

### BRIEF DESCRIPTION OF DRAWINGS

FIG. 1 is a diagram of a structure of a dual-zone air conditioning system in a conventional technology;
FIG. 2 is a diagram of a possible application scenario according to this application;
FIG. 3 is a diagram of an architecture of an air conditioning system according to this application;
FIG. 4 shows a partition plate disposed between a first refrigeration component and a second refrigeration component according to this application;
FIG. 5 is a diagram of a structure of a refrigeration component according to this application;
FIG. 6a is a diagram of a connection relationship between a first expansion valve and a first refrigeration component and a connection relationship between a second expansion valve and a second refrigeration component according to this application;
FIG. 6b is a diagram of a connection relationship between a first three-way valve and a first refrigeration component and a connection relationship between the first three-way valve and a second refrigeration component according to this application;
FIG. 7 is a diagram of a structure of a heating component according to this application;
FIG. 8a is a diagram of a connection relationship between a first flow valve and a first heating component and a connection relationship between a second flow valve and a second heating component according to this application;
FIG. 8b is a diagram of a connection relationship between a second three-way valve and a first heating component and a connection relationship between the second three-way valve and a second heating component according to this application;
FIG. 9a to FIG. 9k each are a diagram of an operating mode of an air conditioning system according to this application;
FIG. 10 is a diagram of another structure of an air conditioning system according to this application;
FIG. 11 is a diagram of another structure of an air conditioning system according to this application;
FIG. 12a to FIG. 12l each are a diagram of another operating mode of an air conditioning system according to this application;
FIG. 13 is a diagram of another structure of an air conditioning system according to this application; and
FIG. 14 is an example functional block diagram of a vehicle according to this application.

### DESCRIPTION OF EMBODIMENTS

The following describes in detail embodiments of this application with reference to the accompanying drawings.

FIG. 2 is a diagram of a possible application scenario according to this application. In this application scenario, an example in which an air conditioning system is mounted in a vehicle is used. The air conditioning system includes at least two temperature zones, and temperatures and/or air volumes of different temperature zones may be controlled. Further, different temperature zones may correspond to different positions. For example, the air conditioning system includes two temperature zones (which are respectively a temperature zone A and a temperature zone B). In possible application, the temperature zone A may adjust a temperature and/or an air volume at a position of a driver's seat, and the temperature zone B may adjust a temperature and/or an air volume at a position of a passenger seat. In other possible application, the temperature zone A may adjust a temperature and/or an air volume of front-row space of the vehicle, and the temperature zone B may adjust a temperature and/or an air volume of rear-row space of the vehicle. The air conditioning system can adapt to a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), plug-in hybrid electric vehicle (plug-in hybrid electric vehicle, PHEV), another new energy vehicle (new energy vehicle, NEV), a fuel vehicle, or the like.

It should be understood that the foregoing application scenario is merely an example, and the air conditioning system provided in this application may be further applied to another possible scenario, and is not limited to the scenario shown in the foregoing example. For example, the air conditioning system may be further mounted on an uncrewed aerial vehicle as an aircraft air conditioning or the like. For another example, the air conditioning system may also be applied indoors, for example, used as a household air conditioning or a workshop air conditioning. For another example, the air conditioning system may also be applied to a commercial air conditioning unit. Other examples are not listed one by one herein.

For example, the foregoing application scenario may be applied to fields such as self-driving, manual driving, assisted driving, intelligent driving, or connected vehicles.

As described in the background, an air conditioning system in the conventional technology usually controls a temperature of each temperature zone by using a temperature air door based-air mixing structure. However, because the temperature air door based-air mixing structure is complex and the air volume is not evenly distributed, temperature control accuracy of each temperature zone is poor, and the temperature of each temperature zone cannot be independently controlled.

In view of the foregoing problems, this application provides an air conditioning system. The air conditioning system can accurately and independently control a temperature of each area.

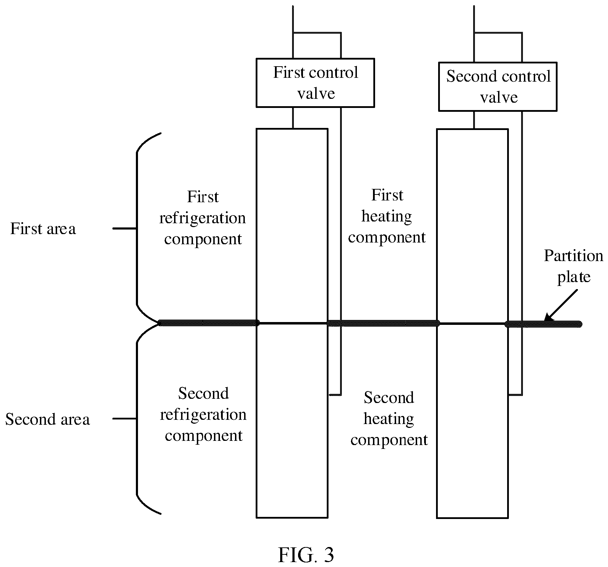

Based on the foregoing content, the air conditioning system provided in this application is specifically described below with reference to FIG. 3 to FIG. 13.

FIG. 3 is a diagram of an architecture of an air conditioning system according to this application. The air conditioning system may include a first refrigeration component, a second refrigeration component, a first heating component, a second heating component, a first control valve, and a second control valve. The first control valve is configured to control cooling performed by the first refrigeration component and the second refrigeration component. The second control valve is configured to control heating performed by the first heating component and the second heating component. Based on this, the air conditioning system includes at least a first area and a second area. The first area includes the first refrigeration component and the first heating component, the second area includes the second refrigeration component and the second heating component, and a partition plate is disposed between the first area and the second area.

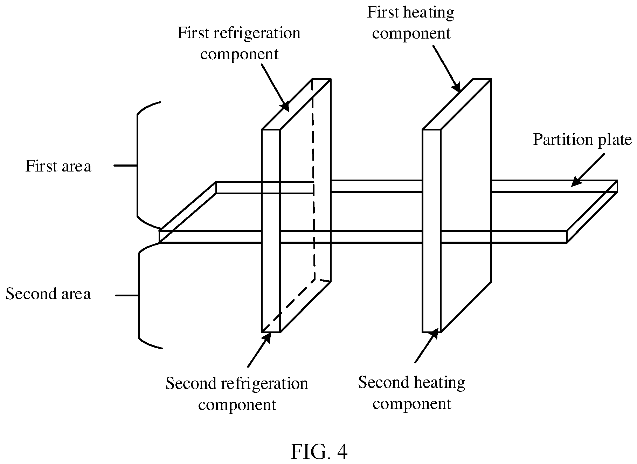

Refer to FIG. 4. The partition plate is clamped between the first refrigeration component and the second refrigeration component, and between the first heating component and the second heating component. The partition plate is configured to separate the first area from the second area, so that the first refrigeration component and the second refrigeration component operate independently and do not interfere with each other, and the first heating component and the second heating component operate independently and do not interfere with each other. In other words, the partition plate is configured to separate air ducts of the first area and the second area, so that the air ducts of the first area and the second area do not affect each other. Further, optionally, a material of the partition plate includes but is not limited to a thermal insulation material or another possible material (such as plastic). The thermal insulation material is a material that can block heat transfer.

It should be noted that names of the components in FIG. 3 are merely examples. The components may alternatively have another possible name. For example, the first refrigeration component may alternatively be referred to as a first refrigeration core or a first refrigeration unit, and the second refrigeration component may alternatively be referred to as a second refrigeration core or a second refrigeration unit. The first heating component may alternatively be referred to as a first heating core or a first heating unit, and the second heating component may alternatively be referred to as a second heating core or a second heating unit.

Based on the foregoing air conditioning system, the first refrigeration component and the second refrigeration component may be independently controlled by using the first control valve, the first heating component and the second heating component may be independently controlled by using the second control valve, and there is no need to be cooled together and then be separately heated. In this way, energy consumption can be reduced. In addition, the first area and the second area can be separated by using the partition plate, so that temperatures of the first area and the second area of the air conditioning system can be accurately controlled by using the first control valve and the second control valve.

The following separately describes functional components and structures shown in FIG. 3, to provide specific example implementation solutions.
1. First refrigeration component and second refrigeration component

In a possible implementation, the first refrigeration component and the second refrigeration component are integrated. A structure in which the first refrigeration component and the second refrigeration component are integrated is more compact, so that miniaturization of the air conditioning system is facilitated, and assembly steps of the air conditioning system can be simplified.

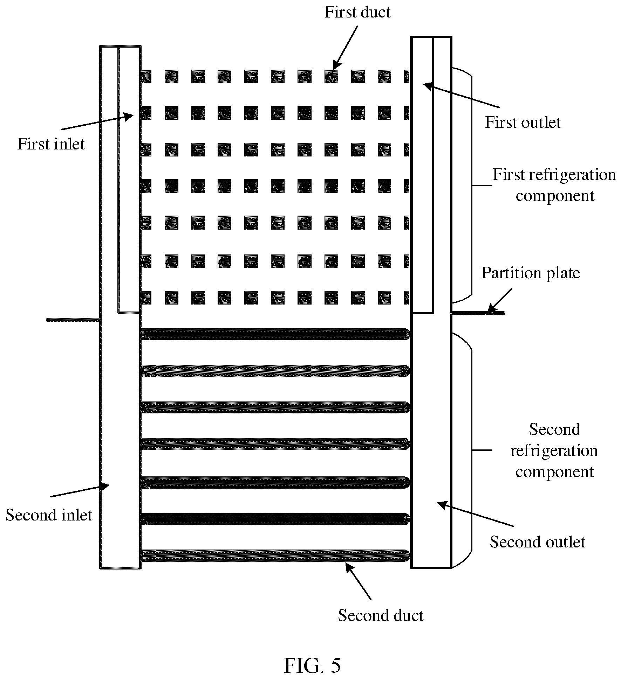

FIG. 5 is a diagram of a structure of a refrigeration component according to this application. The refrigeration component includes the first refrigeration component and the second refrigeration component that are integrated. The first refrigeration component is provided with a first inlet, a first outlet, and at least one first duct (or referred to as a flow passage). One end of each of the at least one first duct is connected to the first inlet, and the other end is connected to the first outlet. Based on this, a first heat transfer medium may enter the first duct from the first inlet of the first refrigeration component, and then flow out from the first outlet, to implement flowing of the first heat transfer medium in the first refrigeration component, so that refrigeration effect is implemented on the first area. The second refrigeration component is provided with a second inlet, a second outlet, and at least one second duct. One end of each of the at least one second duct is connected to the second inlet, and the other end is connected to the second outlet. Based on this, a second heat transfer medium enters the second duct from the second inlet of the second refrigeration component, and then flows out from the second outlet, to implement flowing of the second heat transfer medium in the second refrigeration component, so that refrigeration effect is implemented on the second area. In other words, two independent flow passage sets are implemented in one refrigeration component. One flow passage set is used for refrigeration, and the other flow passage set is also used for refrigeration. In addition, the two flow passage sets independently operate and do not interfere with each other.

In a possible implementation, with reference to FIG. 5, the first inlet is embedded in the second inlet and the first inlet is isolated from the second inlet, and/or the first outlet is embedded in the second outlet and the first outlet is isolated from the second outlet. The first inlet is embedded in the second inlet and/or the first outlet is embedded in the second outlet. This helps reduce a volume of a refrigeration apparatus. The first inlet is isolated from the second inlet, and the first outlet is isolated from the second outlet, so that the first refrigeration component and the second refrigeration component can independently operate.

Further, optionally, if the first refrigeration component includes a plurality of first ducts, the plurality of first ducts are arranged in parallel with each other and side by side. If the second refrigeration component includes a plurality of second ducts, the plurality of second ducts are arranged in parallel with each other and side by side. A structure of the first refrigeration component may be more compact by using the first ducts arranged in parallel and side by side, and/or a structure of the second refrigeration component may be more compact by using the plurality of second ducts arranged in parallel and side by side.

In a possible implementation, the first heat transfer medium may include a first refrigerant. For example, the first refrigerant includes but is not limited to a refrigerant such as R134a, R1234yf, R744, or R290. The second heat transfer medium may include a second refrigerant. For example, the second refrigerant includes but is not limited to a refrigerant such as R134a, R1234yf, R744, or R290.

In a possible implementation, the first refrigeration component and the second refrigeration component may be connected to a same cold source. Based on this, the first heat transfer medium is the same as the second heat transfer medium. The first refrigeration component and the second refrigeration component are connected to the same cold source. This helps simplify an architecture of the air conditioning system compared with a conventional technology in which different cold sources are used. Alternatively, the first refrigeration component and the second refrigeration component are connected to different cold sources. Based on this, the first heat transfer medium may be the same as or may be different from the second heat transfer medium.

The following shows two manners of controlling cooling performed by the first refrigeration component and the second refrigeration component as examples.

Manner 1: Cooling performed by the first refrigeration component may be controlled by a first expansion valve, and cooling performed by the second refrigeration component may be controlled by a second expansion valve.

In a possible implementation, the expansion valve can enable a medium-temperature and high-pressure liquid heat transfer medium to become low-temperature and low-pressure wet steam through throttling by the expansion valve. The low-temperature and low-pressure wet steam absorbs heat in an evaporator, so that a cooling function is implemented. The expansion valve is usually assembled at a refrigerant inlet in the evaporator.

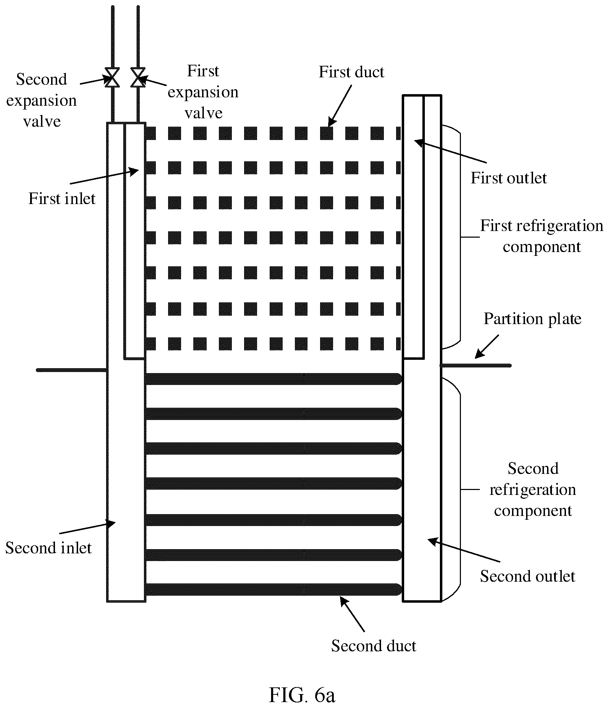

FIG. 6a is a diagram of a connection relationship between a first expansion valve and a first refrigeration component and a connection relationship between a second expansion valve and a second refrigeration component according to this application. A first port of the first expansion valve is connected to the first refrigeration component. Specifically, the first port of the first expansion valve is connected to the first inlet of the first refrigeration component, and a second port of the first expansion valve is connected to the cold source. A first port of the second expansion valve is connected to the second refrigeration component. Specifically, the first port of the second expansion valve is connected to the second inlet of the second refrigeration component, and a second port of the second expansion valve is connected to the cold source. The first expansion valve can control enabling or disabling of a refrigeration function of a refrigeration component, and control strength of a refrigeration capability of the first refrigeration component. Enabling or disabling of a refrigeration function of the second refrigeration component and strength of a refrigeration capability of the second refrigeration component may be controlled by using the second expansion valve. In addition, the first refrigeration component and the second refrigeration component may be connected to the same cold source by using the first expansion valve and the second expansion valve. It may be understood that, in this example, the first expansion valve and the second expansion valve are connected to the same cold source.

For example, the first expansion valve is on, and the first heat transfer medium enters the first inlet of the first refrigeration component from the cold source through the first expansion valve. The second expansion valve is on, and the second heat transfer medium enters the second inlet of the second refrigeration component from the cold source through the second expansion valve. Herein, the first heat transfer medium is the same as the second heat transfer medium. It should be noted that the first expansion valve and the second expansion valve may be both on, may be both off, or one of the first expansion valve and the second expansion valve may be on and the other may be off. In other words, the first expansion valve and the second expansion valve independently operate and do not affect each other.

Manner 2: Cooling performed by the first refrigeration component and cooling performed by the second refrigeration component may be controlled by a first three-way valve.

The three-way valve is a valve apparatus in which a valve body has three ports: one inlet and two outlets. Three-way valves are classified into a flow mixing valve and a flow diverting valve based on a way in which fluid operates. The flow mixing valve has two inlet ports, and the fluid flows out from one outlet port after the fluid converges. The flow diverting valve has one fluid inlet port, and the fluid flows out from two fluid outlet ports after the fluid is diverged. The three-way valve may also be understood as an integrated valve with a flow diverting mechanism.

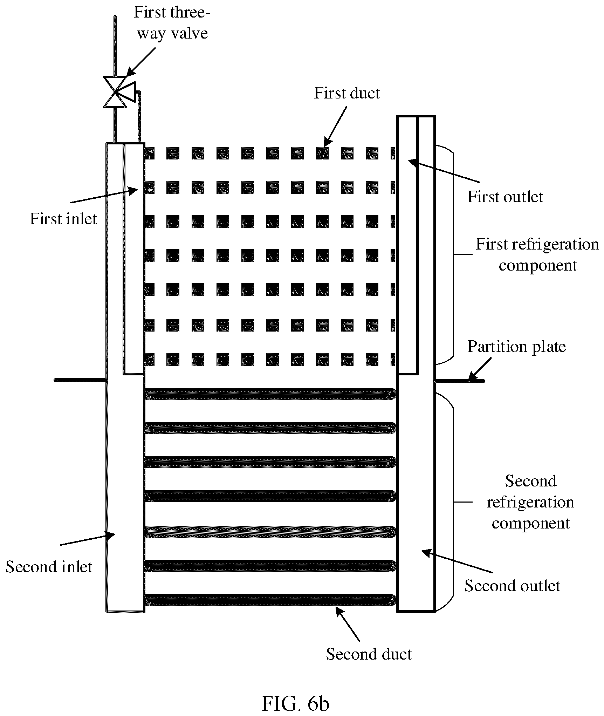

FIG. 6b is a diagram of a connection relationship between a first three-way valve and a first refrigeration component and a connection relationship between the first three-way valve and a second refrigeration component according to this application. A first port of the first three-way valve is connected to the first refrigeration component, a second port of the first three-way valve is connected to the second refrigeration component, and a third port of the first three-way valve is connected to the cold source. Specifically, the first port of the first three-way valve is connected to the first inlet of the first refrigeration component, and the second port of the first three-way valve is connected to the second refrigeration component. Enabling or disabling of refrigeration functions of the first refrigeration component and the second refrigeration component and distribution of a refrigeration amount to the first refrigeration component and the second refrigeration component may be controlled by using the first three-way valve. Therefore, the architecture of the air conditioning system can be simplified. This helps further reduce a volume of the air conditioning system.

For example, the third port and the first port of the first three-way valve are on, and the first heat transfer medium enters the first inlet of the first refrigeration component through the third port and the first port of the first three-way valve. The third port and the second port of the first three-way valve are on, and the second heat transfer medium enters the second inlet of the second refrigeration component from the cold source through the third port and the second port of the first three-way valve. Herein, the first heat transfer medium is the same as the second heat transfer medium.

### 2. First heating component and second heating component

In a possible implementation, the first heating component and the second heating component are integrated. A structure in which the first heating component and the second heating component are integrated is more compact, so that the miniaturization of the air conditioning system is facilitated, and assembly steps of the air conditioning system can be simplified.

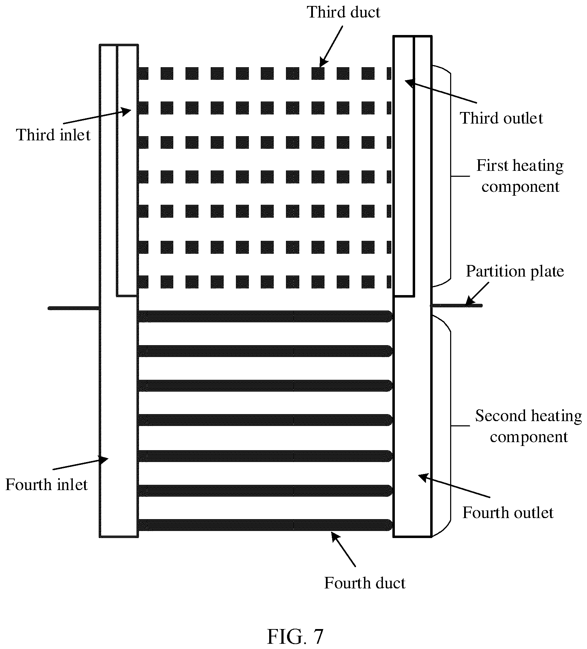

FIG. 7 is a diagram of a structure of a heating component according to this application. The heating component includes the first heating component and the second heating component that are integrated. The first heating component is provided with a third inlet, a third outlet, and at least one third duct (or referred to as a flow passage). One end of each of the at least one third duct is connected to the third inlet, and the other end is connected to the third outlet. A third heat transfer medium may enter the third duct from the third inlet of the first heating component, and then flow out from the third outlet, to implement flowing of the third heat transfer medium in the first heating component, so that heating effect is implemented on the first area. The second heating component is provided with a fourth inlet, a fourth outlet, and at least one fourth duct. One end of each of the at least one fourth duct is connected to the fourth inlet, and the other end is connected to the fourth outlet. A fourth heat transfer medium enters the fourth duct from the fourth inlet of the second heating component, and then flows out from the fourth outlet, to implement flowing of the fourth heat transfer medium in the second heating component, so that the heating effect is implemented on the second area. In other words, two independent flow passage sets are implemented in one heating component. One flow passage set is used for heating, and the other flow passage set is used for heating. In addition, the two flow passage sets independently operate and do not interfere with each other.

In a possible implementation, with reference to FIG. 7, the third inlet is embedded in the fourth inlet and the third inlet is isolated from the fourth inlet, and/or the third outlet is embedded in the fourth outlet and the third outlet is isolated from the fourth outlet. The third inlet is embedded in the fourth inlet and/or the third outlet is embedded in the fourth outlet. This helps reduce a volume of a heating apparatus. The third inlet is isolated from the fourth inlet, and the third outlet is isolated from the fourth outlet, so that the first heating component and the second heating component can independently operate.

Further, optionally, if the first heating component includes a plurality of third ducts, the plurality of third ducts are arranged in parallel with each other and side by side. If the second heating component includes a plurality of fourth ducts, the plurality of third ducts are arranged in parallel with each other and side by side. A structure of the first heating component may be more compact by using the third ducts arranged in parallel and side by side, and/or a structure of the second heating component may be more compact by using the fourth ducts arranged in parallel and side by side.

In a possible implementation, the third heat transfer medium may include a third refrigerant. For example, the third refrigerant includes but is not limited to a refrigerant such as R134a, R1234yf, R744, or R290. Alternatively, the third refrigerant includes a first coolant. For example, the first coolant may include but is not limited to mixed liquid of water and ethylene glycol. The fourth heat transfer medium may include a fourth refrigerant. For example, the second refrigerant includes but is not limited to a refrigerant such as R134a, R1234yf, R744, or R290. Alternatively, the fourth refrigerant includes a second coolant. For example, the second coolant may include but is not limited to mixed liquid of water and ethylene glycol. It may be understood that the third refrigerant may be the same as or may be different from the fourth refrigerant, and the first coolant may be the same as or may be different from the second coolant. This is not limited in this application.

In a possible implementation, the first heating component and the second heating component may be connected to a same heat source. Based on this, the third heat transfer medium is the same as the fourth heat transfer medium. Alternatively, the first heating component and the second heating component are connected to different heat sources. Based on this, the third heat transfer medium may be the same as or may be different from the fourth heat transfer medium.

The following shows two manners of controlling cooling performed by the first refrigeration component and the second refrigeration component as examples.

Manner A: Heating performed by the first heating component may be controlled by a first flow valve, and heating performed by the second heating component may be controlled by a second flow valve.

In a possible implementation, the flow valve controls, by using an opening of the valve, a flow quantity of the heat transfer medium that flows through the flow valve, to control a heat transfer quantity (referred to as a heating amount below).

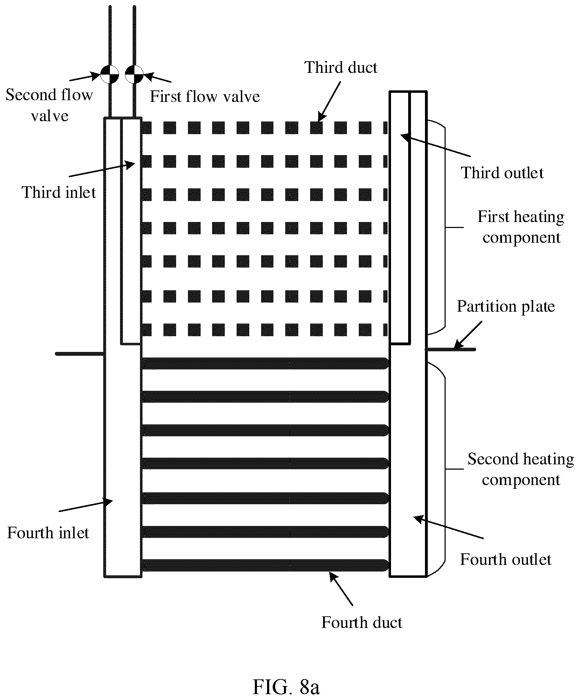

FIG. 8a is a diagram of a connection relationship between a first flow valve and a first heating component and a connection relationship between a second flow valve and a second heating component according to this application. A first port of the first flow valve is connected to the first heating component. Specifically, the first port of the first flow valve is connected to the third inlet of the first heating component, and a second port of the first flow valve is connected to the cold source. A first port of the second flow valve is connected to the second heating component. Specifically, the first port of the second flow valve is connected to the fourth inlet of the second heating component, and a second port of the second flow valve is connected to the cold source. Enabling or disabling of a heating function of the first heating component and strength of a heating capability of the first heating component may be controlled by using the first flow valve. Enabling or disabling of a heating function of the second heating component and strength of a heating capability of the second heating component may be controlled by using the second flow valve. In addition, the first heating component and the second heating component may be connected to the same heat source by using the first flow valve and the second flow valve. This helps simplify the architecture of the air conditioning system compared with a conventional technology in which different heat sources are used, thereby helping further reduce the volume of the air conditioning system.

Further, optionally, the first flow valve is on, and the third heat transfer medium enters the third inlet of the first heating component from the heat source through the first flow valve. The second flow valve is on, and the fourth heat transfer medium enters the fourth inlet of the second heating component from the heat source through the second flow valve. Herein, the third heat transfer medium is the same as the fourth heat transfer medium. It should be noted that the first flow valve and the second flow valve may be both on, may be both off, or one of the first flow valve and the second flow valve may be on and the other may be off.

Manner B: Heating of the first heating component and heating of the second heating component may be controlled by a second three-way valve.

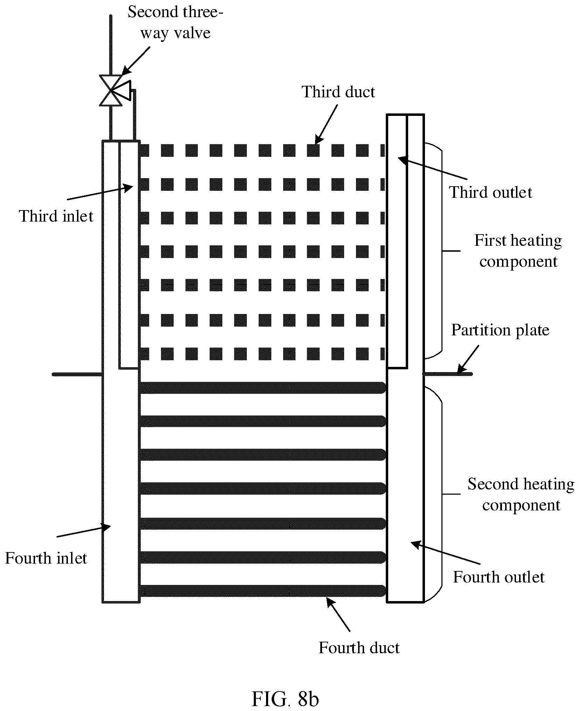

FIG. 8b is a diagram of a connection relationship between a second three-way valve and a first heating component and a connection relationship between the second three-way valve and a second heating component according to this application. A first port of the second three-way valve is connected to the first heating component, a second port of the second three-way valve is connected to the second heating component, and a third port of the second three-way valve is connected to the heat source. Further, optionally, the first port of the second three-way valve is connected to the third inlet of the first heating component, and the second port of the second three-way valve is connected to the second heating component. Enabling or disabling of heating functions of the first heating component and the second heating component and distribution of a heating amount to the first heating component and the second heating component may be controlled by using the second three-way valve. Therefore, the architecture of the air conditioning system can be simplified. This helps further reduce the volume of the air conditioning system.

For example, the third port and the first port of the second three-way valve are on, and the third heat transfer medium enters the third inlet of the first heating component from the heat source through the third port and the first port of the second three-way valve. The third port and the second port of the second three-way valve are on, and the fourth heat transfer medium enters the fourth inlet of the second heating component from the heat source through the third port and the second port of the second three-way valve. Herein, the third heat transfer medium is the same as the fourth heat transfer medium.

It should be noted that the foregoing two manners of controlling cooling performed by the first refrigeration component and the second refrigeration component are merely examples. This is not limited in this application. Alternatively, the manner of controlling cooling performed by the first refrigeration component and the second refrigeration component may be a combination of Manner 1 and Manner 2. For example, the cooling of the first refrigeration component is controlled by using the first expansion valve, and the cooling of the second refrigeration component is controlled by using the second expansion valve. The heating of the first heating component and the heating of the second heating component are controlled by using the second three-way valve. For another example, the cooling of the first refrigeration component and the cooling of the second refrigeration component are controlled by using the first three-way valve. The heating of the first heating component is controlled by using the first flow valve, and the heating of the second heating component is controlled by using the second flow valve. In addition, there may be another possible structure to control cooling performed by the first refrigeration component and the second refrigeration component and control heating performed by the first heating component and the second heating component. Details are not described herein again.

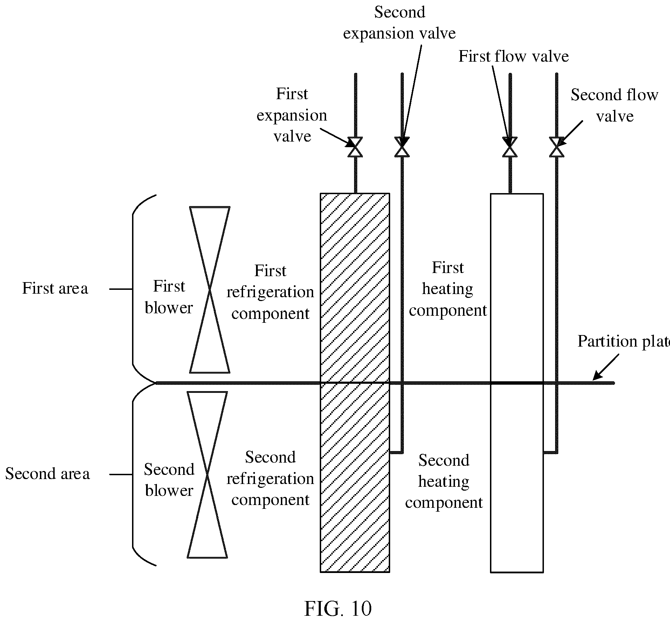

In a possible implementation, the first refrigeration component and the second refrigeration component that are integrated and the first heating component and the second heating component that are integrated are arranged side by side. Refer to FIG. 3 or FIG. 10.

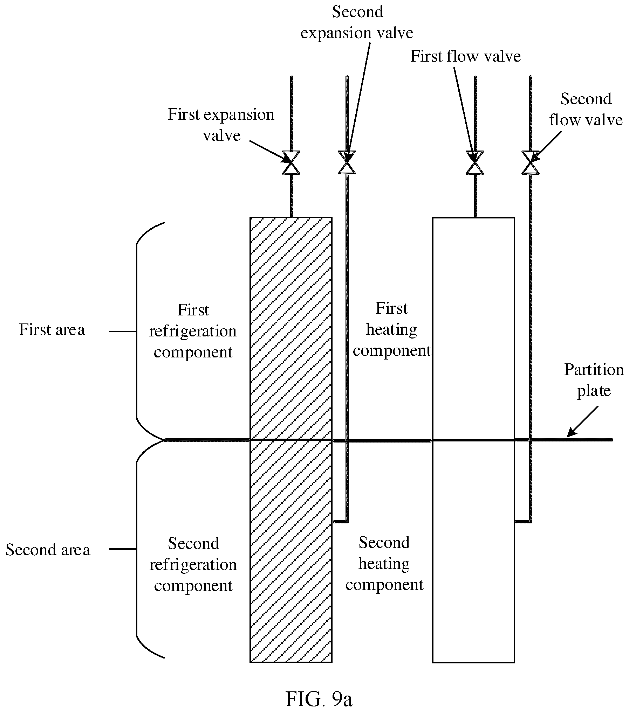

The following describes possible operating modes of the air conditioning system as examples based on the first refrigeration component, the second refrigeration component, the first heating component, and the second heating component. For ease of solution description, an example in which filling patterns of the first refrigeration component, the second refrigeration component, the first heating component, and the second heating component indicate that the first refrigeration component, the second refrigeration component, the first heating component, and the first heating component are in operating states, and unfilled patterns of the first refrigeration component, the second refrigeration component, the first heating component, and the second heating component indicate that the first refrigeration component, the second refrigeration component, the first heating component, and the first heating component are in off states. An example in which the first refrigeration component and the second refrigeration component are connected to the same cold source is used. An example in which the first heating component and the second heating component are connected to the same heat source is used. An example in which shapes of the first expansion valve, the second expansion valve, the first flow valve, and the second flow valve are the same is used in FIG. 9a to FIG. 9k.

Mode 1: Cooling is performed in the first area, and cooling is performed in the second area. In other words, cooling is synchronously performed in the first area and the second area in Mode 1.

Refer to FIG. 9a. Both the first refrigeration component and the second refrigeration component are in a cooling state, and both the first heating component and the second heating component are in the off state. An example in which the first control valve includes the first expansion valve and the second expansion valve is used. An example in which the second control valve includes the first flow valve and the second flow valve is used. Specifically, the first expansion valve and the second expansion valve are on, and the first heat transfer medium in the cold source circulates in the first refrigeration component through the first expansion valve driven by a compressor. In this case, air that enters the air conditioning system may become first cooling air after being cooled by the first refrigeration component. Based on a same process, air that enters the air conditioning system becomes second cooling air after being cooled by the second refrigeration component. Further, both the first flow valve and the second flow valve are off. In this case, neither the first heating component nor the second heating component operates. Based on this, both the first area and the second area produce the cooling air.

Alternatively, an example in which the first control valve includes the first three-way valve is used. An example in which the second control valve includes the second three-way valve is used. Specifically, three ports of the first three-way valve are all on, and the first heat transfer medium in the cold source circulates in the first refrigeration component through the third port and the first port of the first three-way valve driven by a compressor. In this case, air that enters the air conditioning system may become first cooling air after being cooled by the first refrigeration component. The second heat transfer medium in the cold source circulates in the second refrigeration component through the third port and the second port of the first three-way valve driven by the compressor. In this case, air that enters the air conditioning system becomes second cooling air after being cooled by the second refrigeration component. It may be understood that three ports of the second three-way valve are all off. In this case, neither the first heating component nor the second heating component operates.

Mode 2: Heating is performed in the first area, and heating is performed in the second area. In other words, heating is synchronously performed in the first area and the second area in Mode 2.

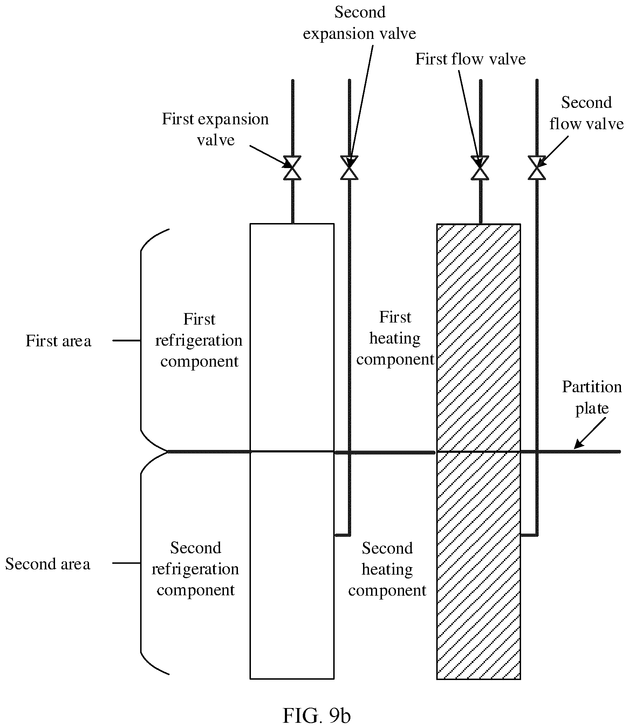

Refer to FIG. 9b. Both the first refrigeration component and the second refrigeration component are in the off state, and both the first heating component and the second heating component are in a heating state. An example in which the first control valve includes the first expansion valve and the second expansion valve is used. An example in which the second control valve includes the first flow valve and the second flow valve is used. Specifically, both the first flow valve and the second flow valve are on, and the third heat transfer medium in the heat source circulates in the first heating component through the first flow valve. In this case, air that enters the air conditioning system becomes first heated air after being heated by the first heating component. Based on a same process, air that enters the air conditioning system becomes second heated air after being heated by the second heating component. It may be understood that the first expansion valve and the second expansion valve are off. In this case, neither the first refrigeration component nor the second refrigeration component operates. Based on this, both the first area and the second area are configured to produce the heated air.

Alternatively, an example in which the first control valve includes the first three-way valve is used. An example in which the second control valve includes the second three-way valve is used. Specifically, three ports of the second three-way valve are all on, and the third heat transfer medium in the heat source circulates in the first heating component through the third port and the first port of the second three-way valve. In this case, air that enters the air conditioning system may become first heated air after being heated by the first heating component. The fourth heat transfer medium in the heat source circulates in the second heating component through the third port and the second port of the second three-way valve driven by a compressor. In this case, air that enters the air conditioning system becomes second heated air after being heated by the second heating component. It may be understood that three ports of the first three-way valve are all off. In this case, neither the first refrigeration component nor the second refrigeration component operates.

The first refrigeration component and the second refrigeration component are in the off state, and the first heating component and the second heating component directly perform heating on the air that enters the air conditioning system. In this case, there is no need to perform cooling and then perform heating on the air that enters the air conditioning system. This helps reduce energy consumption of the air conditioning system.

Mode 3: Heating and dehumidification are performed in the first area, and heating and dehumidification are performed in the second area. In other words, heating and dehumidification are synchronously performed in the first area and the second area in Mode 3.

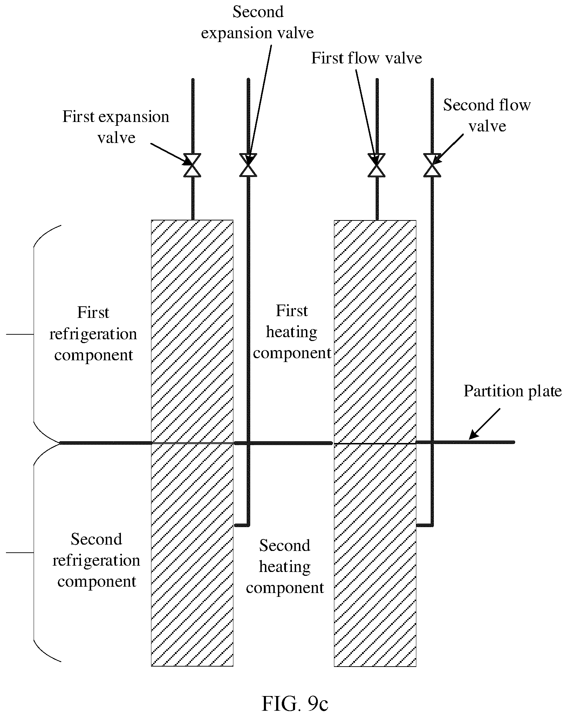

Refer to FIG. 9c. Both the first refrigeration component and the second refrigeration component are in a cooling state, and both the first heating component and the second heating component are in a heating state. An example in which the first control valve includes the first expansion valve and the second expansion valve is used. An example in which the second control valve includes the first flow valve and the second flow valve is used. Specifically, the first expansion valve and the second expansion valve are on. In this case, the first refrigeration component and the second refrigeration component may perform cooling and dehumidification on air that enters the air conditioning system. The first flow valve and the second flow valve are on. In this case, the first heating component and the second heating component perform heating on the air that enters the air conditioning system. It may be understood that the heating and dehumidification is an operating mode that is of the air conditioning system and that is usually performed in spring and fall. In the heating and dehumidification mode, air may be cooled down and dehumidified, and then is heated and blown out. In this way, comfort of a user is improved, fogging in a vehicle is avoided, and the like.

Alternatively, an example in which the first control valve includes the first three-way valve is used. An example in which the second control valve includes the second three-way valve is used. Specifically, three ports of the first three-way valve are all on. In this case, the first refrigeration component and the second refrigeration component may perform cooling and dehumidification on air that enters the air conditioning system. Three ports of the second three-way valve are all on. In this case, the first heating component and the second heating component perform heating on the air that enters the air conditioning system.

Mode 4: Cooling is performed in the first area, and heating is performed in the second area.

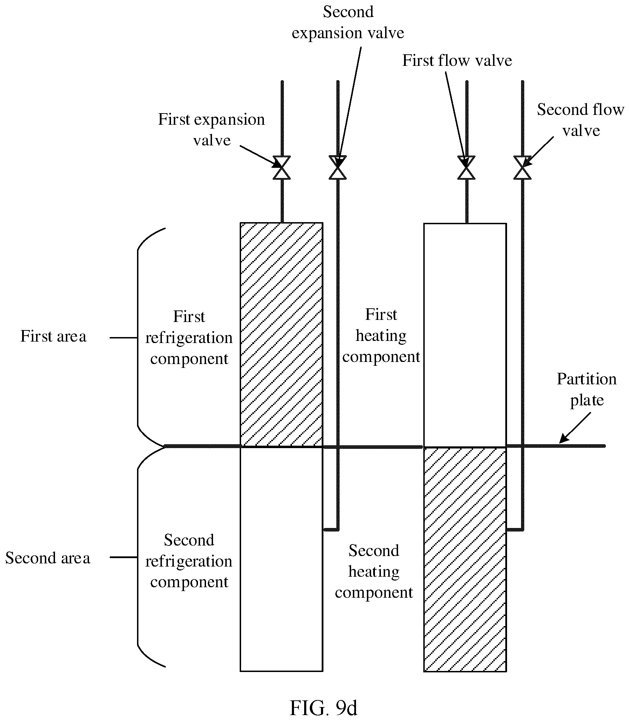

Refer to FIG. 9d. The first refrigeration component is in a cooling state, the second refrigeration component is in the off state, the first heating component is in the off state, and the second heating component is in a heating state. An example in which the first control valve includes the first expansion valve and the second expansion valve is used. An example in which the second control valve includes the first flow valve and the second flow valve is used. Specifically, the first expansion valve is on, and the second expansion valve is off. In this case, the first refrigeration component performs cooling on air that enters the air conditioning system, and the second refrigeration component does not operate. The first flow valve is off, and the second flow valve is on. In this case, the first heating component does not operate, and the second heating component performs heating on the air that enters the air conditioning system.

Alternatively, an example in which the first control valve includes the first three-way valve is used. An example in which the second control valve includes the second three-way valve is used. Specifically, the third port and the first port of the first three-way valve are on, and the second port of the first three-way valve is off. In this case, the first refrigeration component performs cooling on air that enters the air conditioning system, and the second refrigeration component does not operate. The third port and the second port of the second three-way valve are on. In this case, the second heating component performs heating on the air that enters the air conditioning system. The first port of the second three-way valve is off. In this case, the first heating component does not operate.

Mode 5: Heating is performed in the first area, and cooling is performed in the second area.

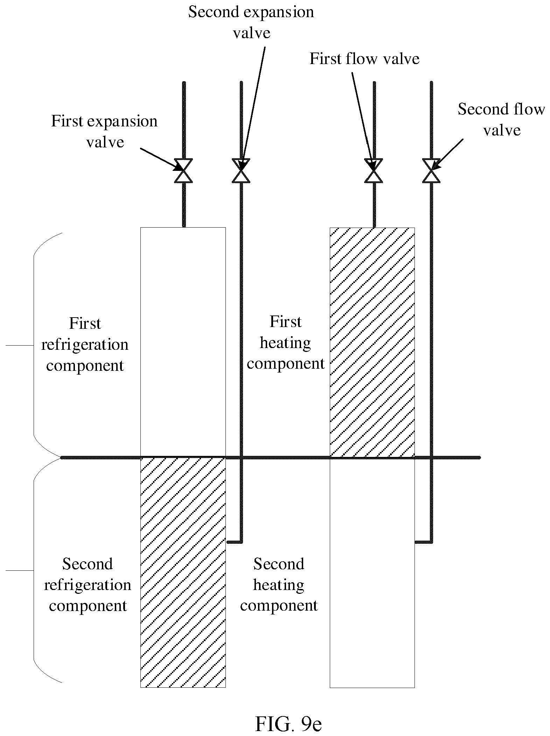

Refer to FIG. 9e. The first refrigeration component is in the off state, the second refrigeration component is in a cooling state, a first heating component is in a heating state, and the second heating component id in the off state. An example in which the first control valve includes the first expansion valve and the second expansion valve is used. An example in which the second control valve includes the first flow valve and the second flow valve is used. Specifically, the first expansion valve is off, and the second expansion valve is on. In this case, the first refrigeration component does not operate, and the second refrigeration component performs cooling on air that enters the air conditioning system. The first flow valve is on, and the second flow valve is off. In this case, the first heating component performs heating on the air that enters the air conditioning system, and the second heating component does not operate.

Alternatively, an example in which the first control valve includes the first three-way valve is used. An example in which the second control valve includes the second three-way valve is used. Specifically, the third port and the second port of the first three-way valve are on, and the first port of the first three-way valve is off. In this case, the second refrigeration component performs cooling on air that enters the air conditioning system, and the first refrigeration component does not operate. The third port and the first port of the second three-way valve are on. In this case, the first heating component performs heating on the air that enters the air conditioning system. The second port of the second three-way valve is off. In this case, the second heating component does not operate.

Mode 6: Cooling is performed in the first area, and heating and dehumidification are performed in the second area.

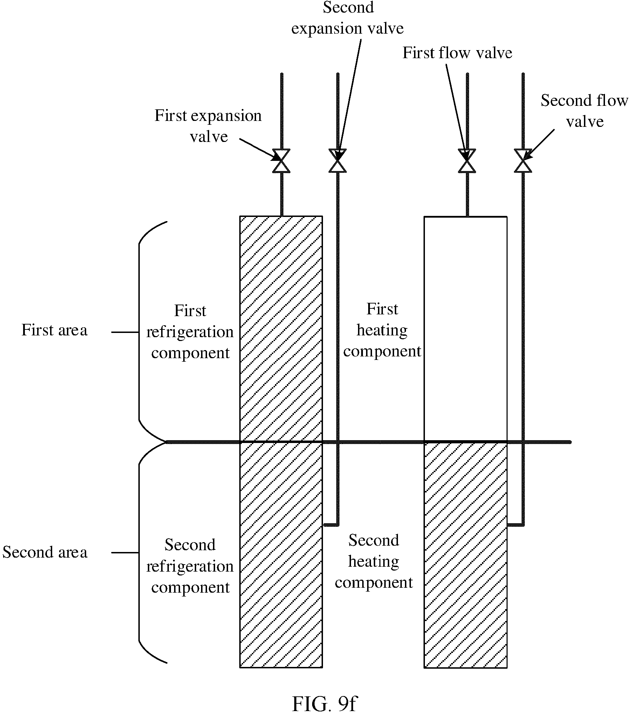

Refer to FIG. 9f. Both the first refrigeration component and the second refrigeration component are in a cooling state, the first heating component is in the off state, and the second heating component is in a heating state. An example in which the first control valve includes the first expansion valve and the second expansion valve is used. An example in which the second control valve includes the first flow valve and the second flow valve is used. Specifically, both the first expansion valve and the second expansion valve are on. In this case, the first refrigeration component and the second refrigeration component perform cooling on air that enters the air conditioning system. The first flow valve is off, and the second flow valve is on. In this case, the first heating component does not operate, and the second heating component performs heating on the air that enters the air conditioning system.

Alternatively, an example in which the first control valve includes the first three-way valve is used. An example in which the second control valve includes the second three-way valve is used. Specifically, three ports of the first three-way valve are all on. In this case, both the first refrigeration component and the second refrigeration component perform cooling on air that enters the air conditioning system. The third port and the second port of the second three-way valve are on. In this case, the second heating component performs heating on the air that enters the air conditioning system. The first port of the second three-way valve is off. In this case, the first heating component does not operate.

Mode 7: Heating and dehumidification are performed in the first area, and cooling is performed in the second area.

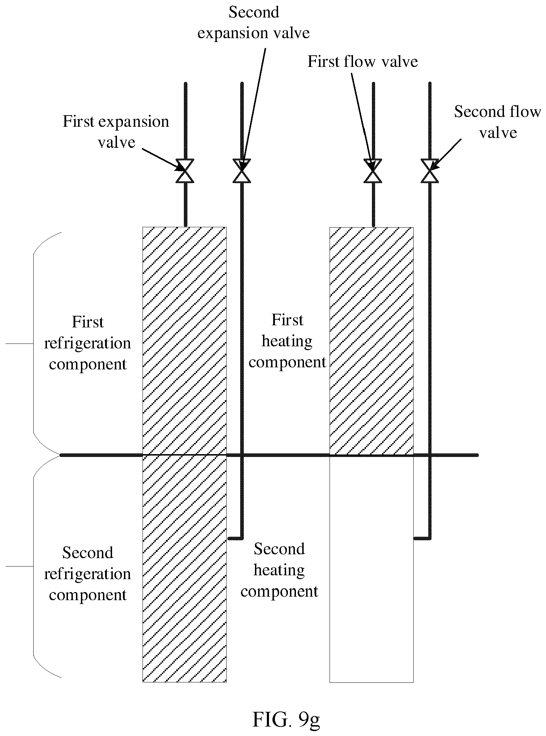

Refer to FIG. 9g. Both the first refrigeration component and the second refrigeration component are in a cooling state, the first heating component is in a heating state, and the second heating component is in the off state. An example in which the first control valve includes the first expansion valve and the second expansion valve is used. An example in which the second control valve includes the first flow valve and the second flow valve is used. Specifically, the first expansion valve and the second expansion valve are on. In this case, the first refrigeration component and the second refrigeration component perform cooling on air that enters the air conditioning system. The first flow valve is on, and the second flow valve is off. In this case, the first heating component performs heating on the air that enters the air conditioning system, and the second heating component does not operate.

Alternatively, an example in which the first control valve includes the first three-way valve is used. An example in which the second control valve includes the second three-way valve is used. Specifically, the third port and the first port of the first three-way valve are on, and the second port of the first three-way valve is off. In this case, the first refrigeration component performs cooling on air that enters the air conditioning system, and the second refrigeration component does not operate. The third port and the first port of the second three-way valve are on. In this case, the first heating component performs heating on the air that enters the air conditioning system. The second port of the second three-way valve is off. In this case, the second heating component does not operate.

Mode 8: Cooling is performed in the first area, and no operation is performed in the second area.

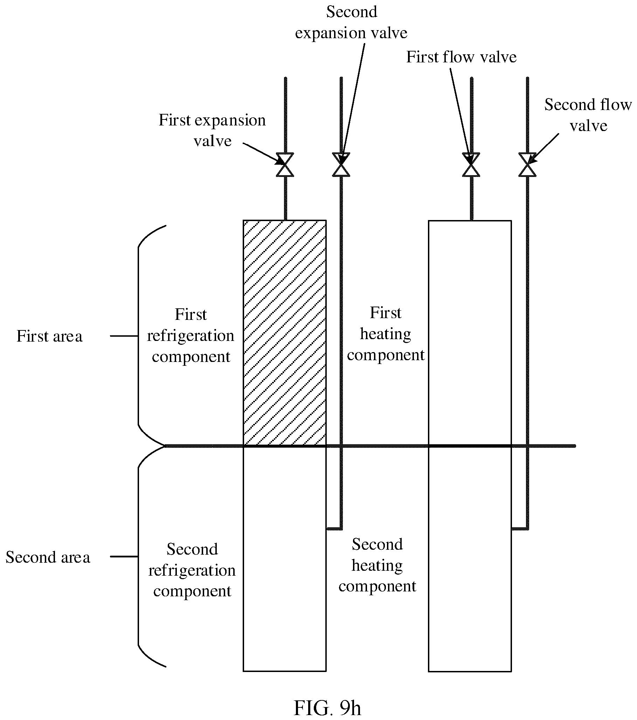

Refer to FIG. 9h. The first refrigeration component is in a cooling state, the second refrigeration component is in the off state, and both the first heating component and the second heating component are in the off state. An example in which the first control valve includes the first expansion valve and the second expansion valve is used. An example in which the second control valve includes the first flow valve and the second flow valve is used. Specifically, the first expansion valve is on, and the second expansion valve, the first flow valve, and the second flow valve are all off. Alternatively, an example in which the first control valve includes the first three-way valve is used. An example in which the second control valve includes the second three-way valve is used. Specifically, the third port and the first port of the first three-way valve is on, the second port of the first three-way valve is off, and three ports of the second three-way valve are all off.

Mode 9: No operation is performed in the first area, and cooling is performed in the second area.

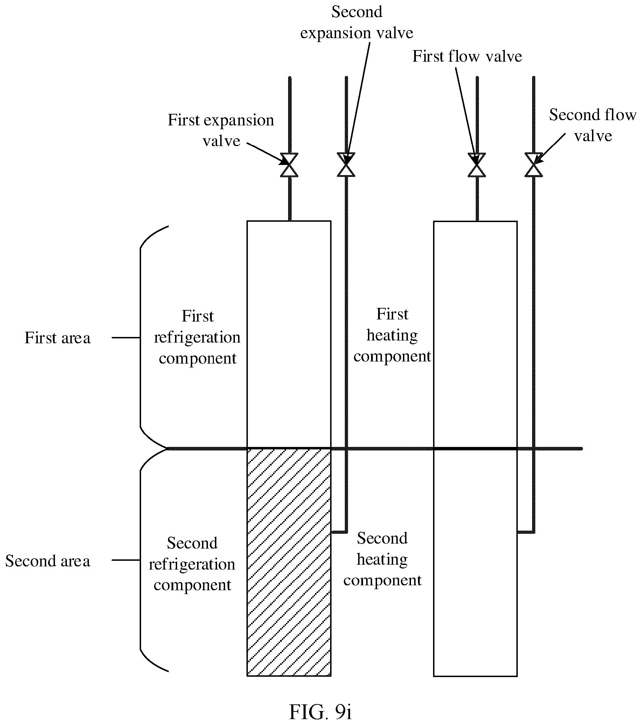

Refer to FIG. 9i. The first refrigeration component is in the off state, the second refrigeration component is in a cooling state, and both the first heating component and the second heating component are in the off state. An example in which the first control valve includes the first expansion valve and the second expansion valve is used. An example in which the second control valve includes the first flow valve and the second flow valve is used. Specifically, the second expansion valve is on, and the first expansion valve, the first flow valve, and the second flow valve are all off. Alternatively, an example in which the first control valve includes the first three-way valve is used. An example in which the second control valve includes the second three-way valve is used. Specifically, the third port and the second port of the first three-way valve are on, the first port of the first three-way valve is off, and three ports of the second three-way valve are all off.

Mode 10: Heating is performed in the first area, and no operation is performed in the second area.

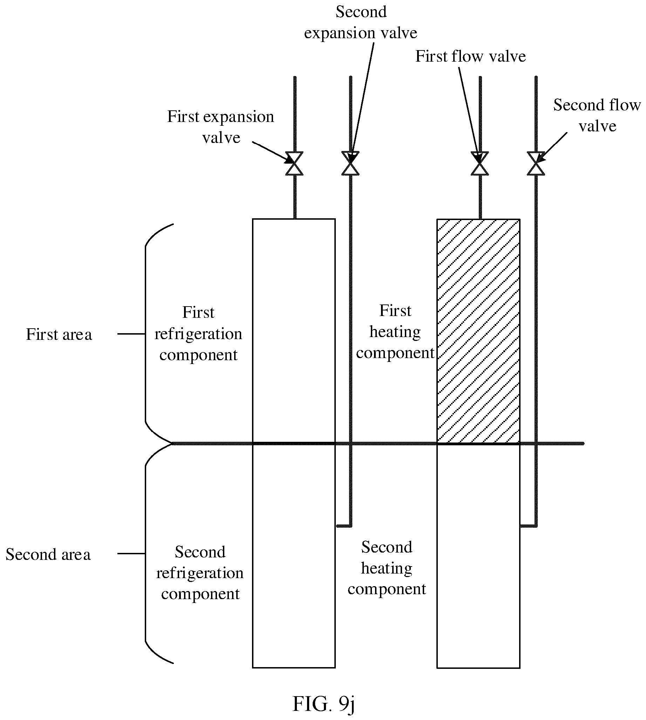

Refer to FIG. 9j. Both the first refrigeration component and the second refrigeration component are in the off state, the first heating component is in a heating state, and the second heating component is in the off state. An example in which the first control valve includes the first expansion valve and the second expansion valve is used. An example in which the second control valve includes the first flow valve and the second flow valve is used. Specifically, the second expansion valve and the first expansion valve are off, the first flow valve is on, and the second flow valve is off. Alternatively, an example in which the first control valve includes the first three-way valve is used. An example in which the second control valve includes the second three-way valve is used. Specifically, three ports of the first three-way valve are all off, the third port and the first port of the second three-way valve are on, and the second port of the second three-way valve is off.

Mode 11: No operation is performed in the first area, and heating is performed in the second area.

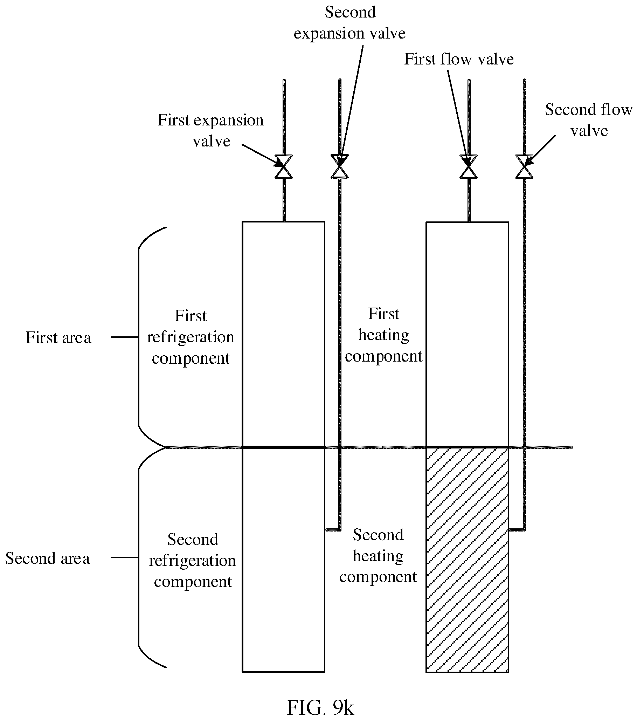

Refer to FIG. 9k. Both the first refrigeration component and the second refrigeration component are in the off state, the first heating component is in the off state, and the second heating component is in a heating state. An example in which the first control valve includes the first expansion valve and the second expansion valve is used. An example in which the second control valve includes the first flow valve and the second flow valve is used. Specifically, the second expansion valve and the first expansion valve are off, the first flow valve is off, and the second flow valve is on. Alternatively, an example in which the first control valve includes the first three-way valve is used. An example in which the second control valve includes the second three-way valve is used. Specifically, three ports of the first three-way valve are all off, the third port and the second port of the second three-way valve are on, and the first port of the second three-way valve is off.

It should be noted that a partition plate is not marked in FIG. 9e to FIG. 9k. Refer to the partition plate marked in FIG. 9a to FIG. 9d.

It should be noted that the air conditioning system provided in this application may further include an air blowing component. Further, optionally, the air conditioning system may further include an air outlet. The following separately describes the air blowing component and the air outlet.

### 4. Air blowing component

In a possible implementation, the air blowing component may include one blower. The first area and the second area may share a same blower. The blower may blow the air that enters the air conditioning system into the first area and/or the second area.

In another possible implementation, the air blowing component may include a first blower and a second blower. The first blower is configured to adjust an air volume of the first area, and the second blower is configured to adjust an air volume of the second area. The air volume of the first area may be independently adjusted by using the first blower, and the air volume of the second area may be independently adjusted by using the second blower. In other words, the air volume of the first area and the air volume of the second area can be independently and accurately controlled by using two independent blowers. Further, optionally, the first blower enables the air that enters the air conditioning system to pass through the first refrigeration component and/or the first heating component. The second blower enables the air that enters the air conditioning system to pass through the second refrigeration component and/or the second heating component.

Specifically, the air volume of the first area may be adjusted by the first blower by adjusting a voltage level of the first blower, and the air volume of the second area may be adjusted by the second blower by adjusting a voltage level of the second blower.

In a possible implementation, the first refrigeration component is located between the first blower and the first heating component, and/or the second refrigeration component is located between the second blower and the second heating component. Refer to FIG. 10. The first refrigeration component is disposed between the first blower and the first heating component, so that the first area of the air conditioning system can operate in the heating and dehumidification mode. The second refrigeration component is disposed between the second blower and the second heating component, so that the second area of the air conditioning system can operate in the heating and dehumidification mode.

### 5. Air outlet

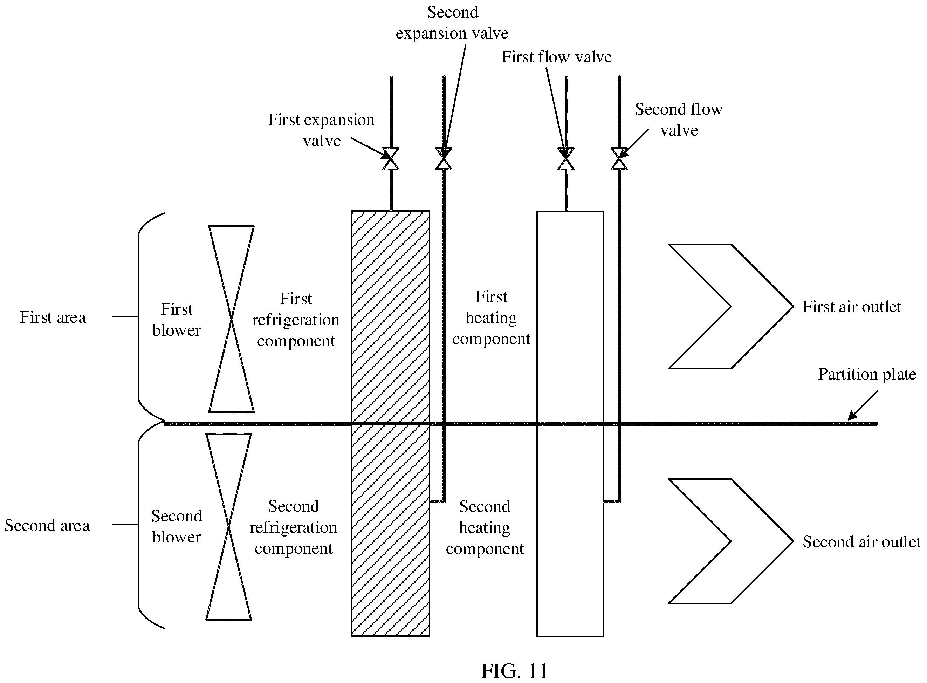

In a possible implementation, the air conditioning system may include at least two air outlets. Different air outlets may be located at different locations, each air outlet may independently adjust a temperature, an air volume, and/or the like. For example, with reference to FIG. 11, the air conditioning system includes a first air outlet and a second air outlet. The first air outlet is an air outlet of the first area, and the first air outlet may be disposed toward a position of a driver's seat. The second air outlet is an air outlet of the second area, and the second air outlet may be disposed toward a position of a passenger seat. For another example, the first air outlet is an air outlet of the first area, and the first air outlet may correspond to front row space. The second air outlet is an air outlet of the second area, and the second air outlet may correspond to rear row space.

For another example, it is assumed that there are five seats in a cockpit. In this case, the air conditioning system includes five air outlets, and one air outlet is configured for each seat. A driver's seat (a front left seat) is a seat 1, a passenger seat (a front right seat) is a seat 2, a rear left seat is a seat 3, a rear middle seat is a seat 4, and a rear right seat is a seat 5.

It may be understood that the air outlet may further adjust an air exhaust direction. For example, the air exhaust direction ranges from 0° to 180°.

Based on the foregoing content, the following provides a specific implementation of the air conditioning system to further understand the structure of the air conditioning system. It should be noted that, unless otherwise specified or there is a logic conflict, the foregoing components may be combined based on an internal logical relationship thereof, to form another possible air conditioning system.

FIG. 11 is a diagram of another structure of an air conditioning system according to this application. The air conditioning system includes the first blower, the second blower, the first refrigeration component, the second refrigeration component, the first heating component, the second heating component, the first control valve, the second control valve, the first air outlet, and the second air outlet. The first refrigeration component and the second refrigeration component are integrated, and the first heating component and the second heating component are integrated. The first refrigeration component is located between the first blower and the first heating component, and the second refrigeration component is located between the second blower and the second heating component. The air conditioning system includes the first area and the second area. The first area includes the first blower, the first refrigeration component, the first heating component, the first control valve, and the first air outlet. The second area includes the second blower, the second refrigeration component, the second heating component, the second control valve, and the second air outlet. For more detailed descriptions of components and structures included in the air conditioning system, refer to the foregoing descriptions. Details are not described herein again.

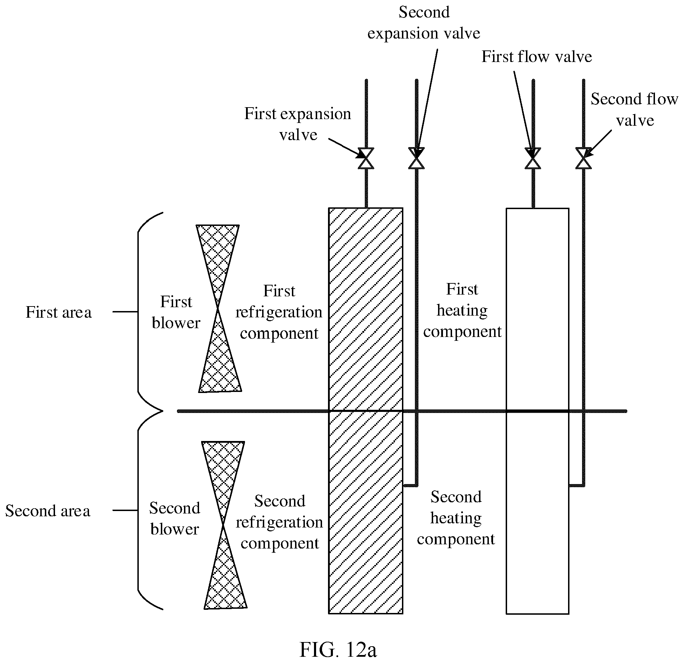

The following shows possible operating modes of the air conditioning system as examples based on the air conditioning system shown in FIG. 11. FIG. 12a to FIG. 12l show examples in which shapes of the first expansion valve, the second expansion valve, the first flow valve, and the second flow valve are the same. In addition, a partition plate is not marked in FIG. 12a to FIG. 12l. Refer to the mark in FIG. 9a to FIG. 9d.

Mode (1): Cooling is performed in the first area, and cooling is performed in the second area.

Refer to FIG. 12a. Both the first blower and the second blower are in an on state. In this case, the first blower blows air that enters the air conditioning system into the first refrigeration component, and the second blower blows the air that enters the air conditioning system into the second refrigeration component. Both the first refrigeration component and the second refrigeration component are in a cooling state, and both the first heating component and the second heating component are in the off state. For refrigeration processes of the first refrigeration component and the second refrigeration component, refer to the description of Mode 1. Details are not described herein again. The first cooling air obtained through the first refrigeration component flows out from the first air outlet, and the second cooling air obtained through the second refrigeration component flows out from the second air outlet.

Mode (2): Heating is performed in the first area, and heating is performed in the second area.

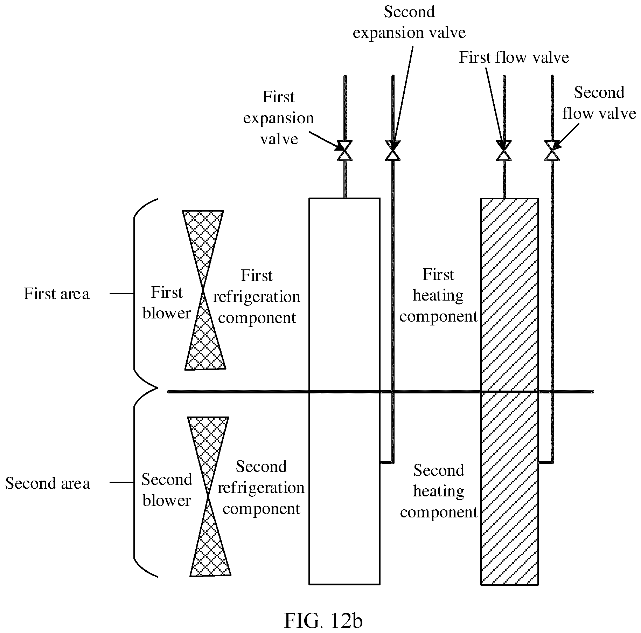

Refer to FIG. 12b. Both the first blower and the second blower are in an on state. In this case, the first blower blows air that enters the air conditioning system into the first heating component, and the second blower blows the air that enters the air conditioning system into the second heating component. Both the first refrigeration component and the second refrigeration component are in the off state, and both the first heating component and the second heating component are in a heating state. For heating processes of the first heating component and the second heating component, refer to the description of Mode 2. Details are not described herein again. The first heated air obtained through the first heating component flows out from the first air outlet, and the second heated air obtained through the second heating component flows out from the second air outlet.

Mode (3): Heating and dehumidification are performed in the first area, and heating and dehumidification are performed in the second area.

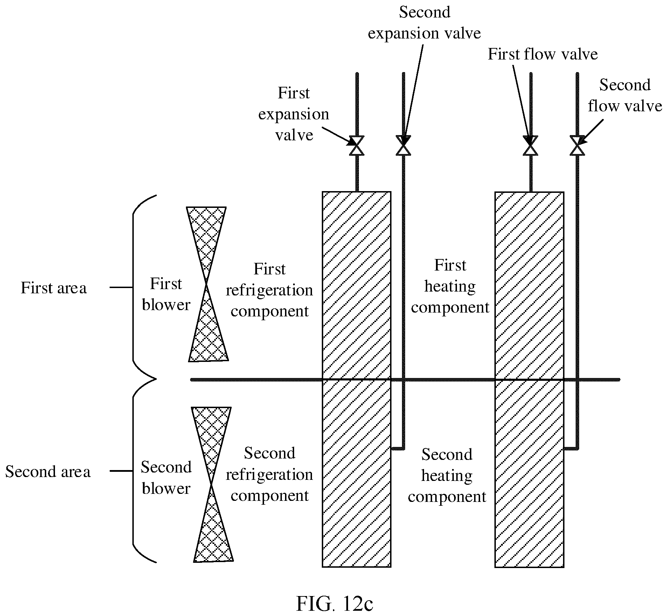

Refer to FIG. 12c. Both the first blower and the second blower are in an on state. In this case, the first blower blows air that enters the air conditioning system into the first refrigeration component, and the first refrigeration component performs cooling on the air that enters the air conditioning system, on which heating is then performed by the first heating component. The second blower blows the air that enters the air conditioning system into the second refrigeration component, and the second refrigeration component performs cooling on the air that enters the air conditioning system, on which heating is then performed by the second heating component. Both the first refrigeration component and the second refrigeration component are in a cooling state, and both the first heating component and the second heating component are in a heating state. For refrigeration processes of the first refrigeration component and the second refrigeration component, refer to the descriptions of Mode 1. For heating processes of the first heating component and the second heating component, refer to the descriptions of Mode 2. Details are not described herein again. Third heated air obtained through the first refrigeration component and the first heating component flows out from the first air outlet, and fourth heated air obtained through the first refrigeration component and the second heating component flows out from the second air outlet. It may be understood that the third heated air and the fourth heated air may be heated air, or may be ambient temperature air. This is not limited in this application. In other words, in a heating and dehumidification mode in the first area, first cooling air may be first obtained through the first refrigeration component, and then heated air may be obtained through the first heating component, or the first cooling air is heated to obtain ambient temperature air through the first heating component. In a heating and dehumidification mode in the second area, second cooling air may be first obtained through the second refrigeration component, and then heated air may be obtained through the second heating component, or the second cooling air is heated to obtain ambient temperature air through the second heating component.

Mode (4): Cooling is performed in the first area, and heating is performed in the second area.

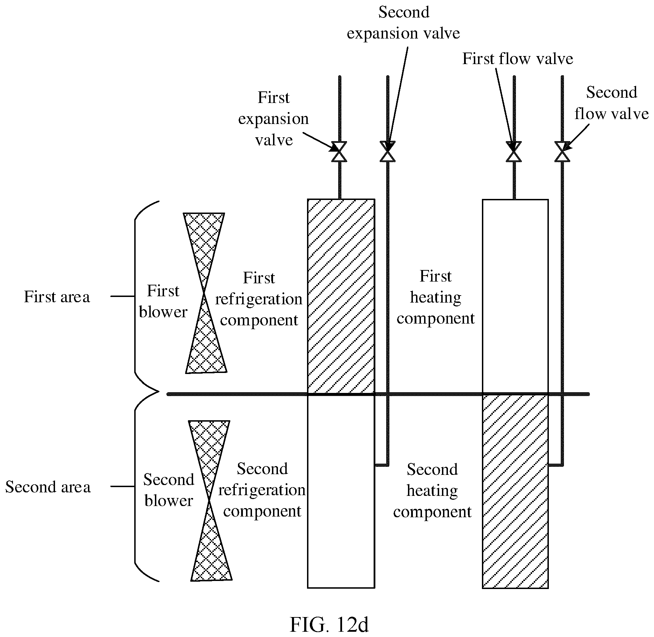

Refer to FIG. 12d. Both the first blower and the second blower are in an on state. In this case, the first blower blows air that enters the air conditioning system into the first refrigeration component, and the second blower blows the air that enters the air conditioning system into the second heating component. The first refrigeration component is in a cooling state, the second refrigeration component is in the off state, the first heating component is in the off state, and the second heating component is in a heating state. For a refrigeration process of the first refrigeration component, refer to the description of Mode 1. For a heating process of the second heating component, refer to the description of Mode 2. Details are not described herein again. First cooling air obtained through the first refrigeration component flows out from the first air outlet, and second heated air obtained through the second heating component flows out from the second air outlet.

Mode (5): Heating is performed in the first area, and cooling is performed in the second area.

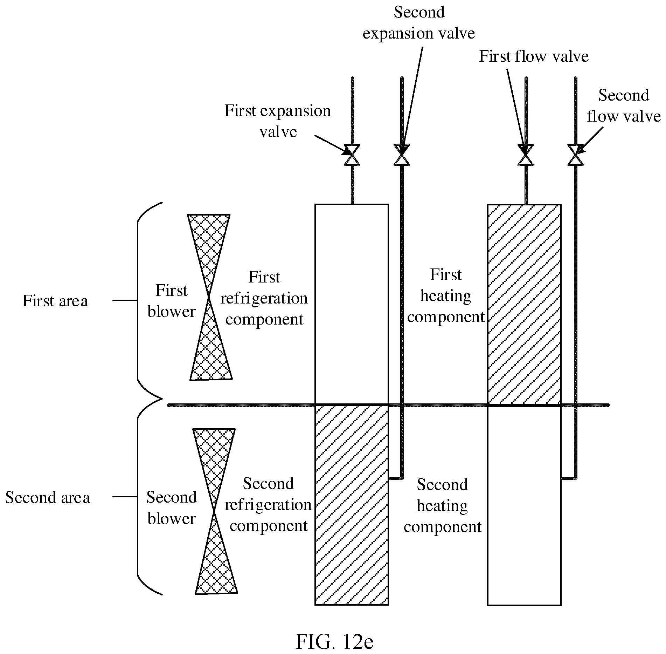

Refer to FIG. 12e. Both the first blower and the second blower are in an on state. In this case, the first blower blows air that enters the air conditioning system into the first heating component, and the second blower blows the air that enters the air conditioning system into the second refrigeration component. The first refrigeration component is in the off state, the second refrigeration component is in a cooling state, the first heating component is in a heating state, and the second heating component is in the off state. For a refrigeration process of the first refrigeration component, refer to the description of Mode 1. For a heating process of the first heating component, refer to the description of Mode 2. Details are not described herein again. First heated air obtained through the first heating component flows out from the first air outlet, and second cooling air obtained through the second refrigeration component flows out from the second air outlet.

Mode (6): Cooling is performed in the first area, and heating and dehumidification are performed in the second area.

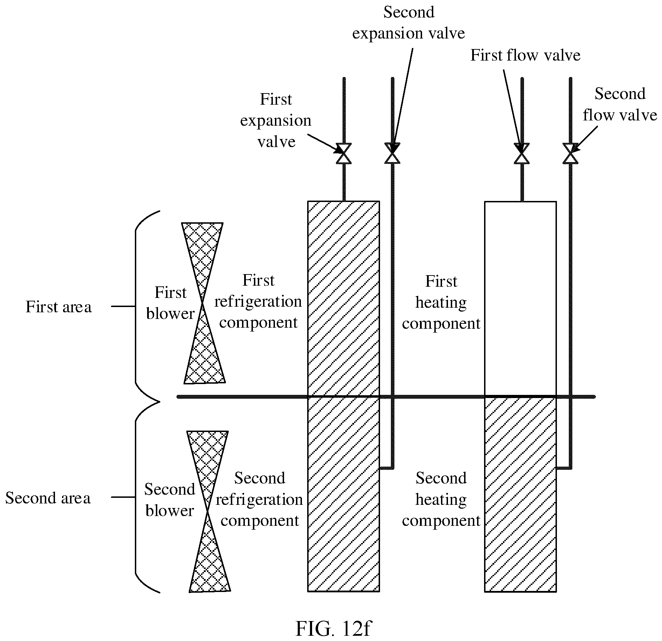

Refer to FIG. 12f. Both the first blower and the second blower are in an on state. In this case, the first blower blows air that enters the air conditioning system into the first refrigeration component, and the second blower blows the air that enters the air conditioning system into the second refrigeration component and the second heating component. Both the first refrigeration component and the second refrigeration component are in a cooling state, the first heating component is in a heating state, and the second heating component is in the off state. For refrigeration processes of the first refrigeration component and the second refrigeration component, refer to the descriptions of Mode 1. For a heating process of the second heating component, refer to the description of Mode 2. Details are not described herein again. First cooling air obtained through the first refrigeration component flows out from the first air outlet, and fourth heated air obtained through the second heating component flows out from the second air outlet.

Mode (7): Heating and dehumidification are performed in the first area, and cooling is performed in the second area.

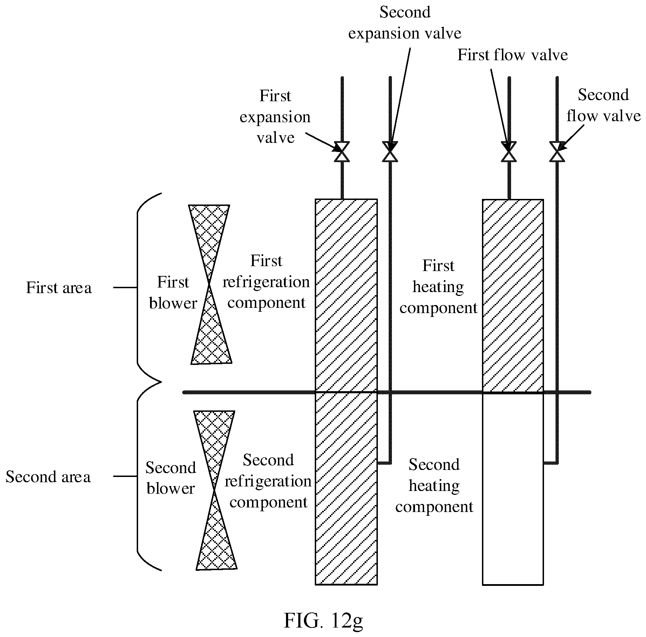

Refer to FIG. 12g. Both the first blower and the second blower are in an on state. In this case, the first blower blows air that enters the air conditioning system into the first refrigeration component and the first heating component, and the second blower blows the air that enters the air conditioning system into the second refrigeration component. Both the first refrigeration component and the second refrigeration component are in a cooling state, the first heating component is in a heating state, and the second heating component is in the off state. For refrigeration processes of the first refrigeration component and the second refrigeration component, refer to the descriptions of Mode 1. For a heating process of the first heating component, refer to the description of Mode 2. Details are not described herein again. Third heated air obtained through the first heating component flows out from the first air outlet, and second cooling air obtained through the second refrigeration component flows out from the second air outlet.

Mode (8): Cooling is performed in the first area, and the second area is off.

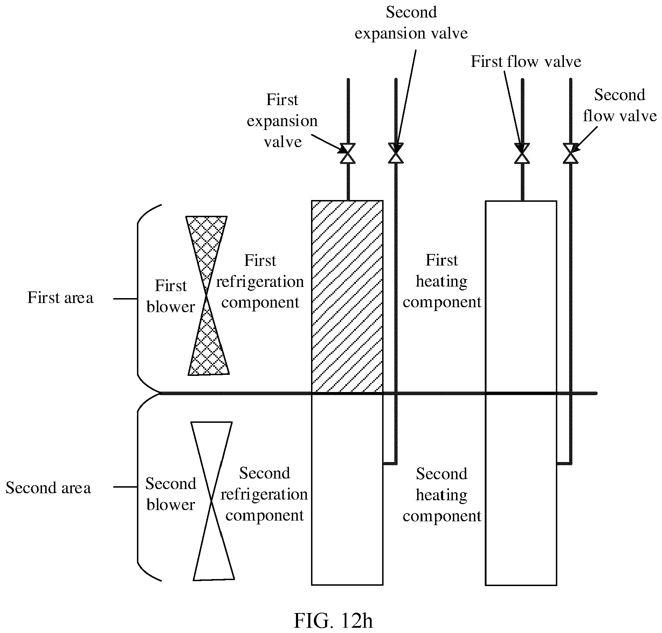

Refer to FIG. 12h. The first blower is in an on state, and the second blower is in the off state. In this case, the first blower blows air that enters the air conditioning system into the first refrigeration component. The first refrigeration component is in a cooling state, the second refrigeration component is in the off state, and both the first heating component and the second heating component are in the off state. First cooling air obtained through the first refrigeration component flows out from the first air outlet.

Mode (9): The first area is off, and cooling is performed in the second area.

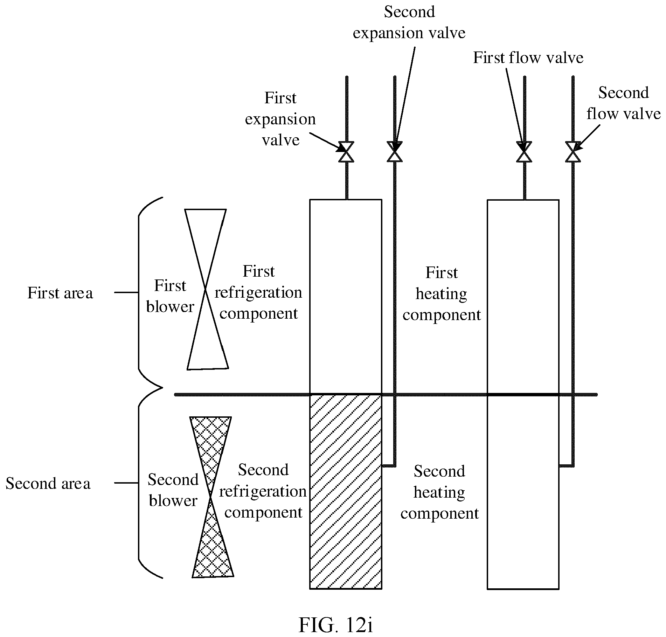

Refer to FIG. 12i. The first blower is in the off state, and the second blower is in an on state. In this case, the second blower blows air that enters the air conditioning system into the second refrigeration component. The first refrigeration component is in the off state, the second refrigeration component is in a cooling state, and both the first heating component and the second heating component are in the off state. Second cooling air obtained through the second refrigeration component flows out from the second air outlet.

Mode (10): Heating is performed in the first area, and the second area is off.

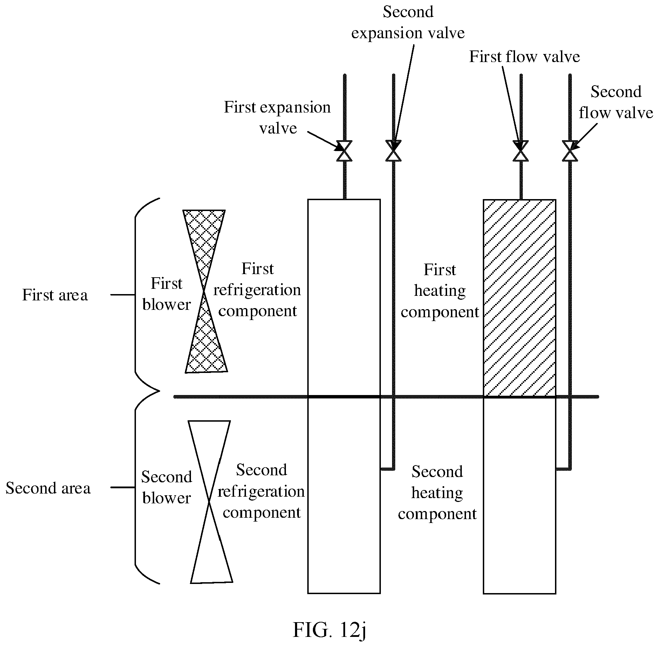

Refer to FIG. 12j. The first blower is in an on state, and the second blower is in the off state. In this case, the first blower blows air that enters the air conditioning system into the first heating component. Both the first refrigeration component and the second refrigeration component are in the off state, the first heating component is in a heating state, and the second heating component is in the off state. First heated air obtained through the first heating component flows out from the first air outlet.

Mode (11): The first area is off, and heating is performed in the second area.

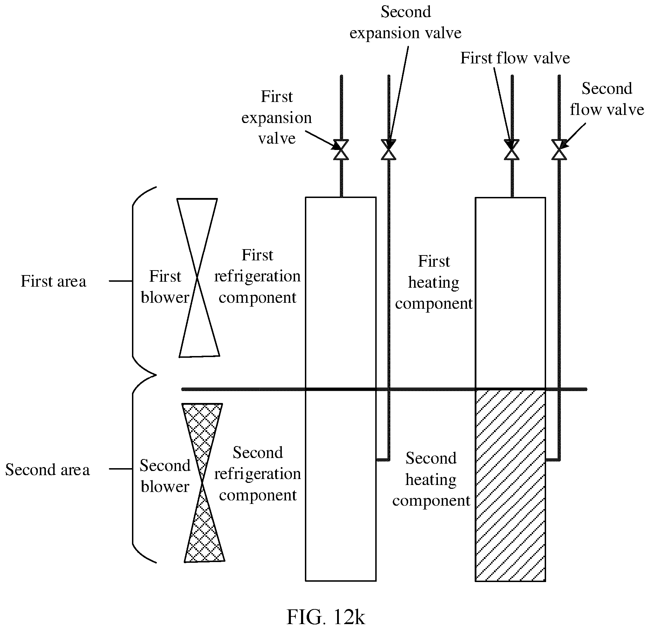

Refer to FIG. 12k. The first blower is in the off state, and the second blower is in an on state. In this case, the second blower blows air that enters the air conditioning system into the second refrigeration component. Both the first refrigeration component and the second refrigeration component are in the off state, the first heating component is in the off state, and the second heating component is in a heating state. Second heated air obtained through the second heating component flows out from the second air outlet.

Mode (12): Ventilation is performed in the first area, and ventilation is performed in the second area.

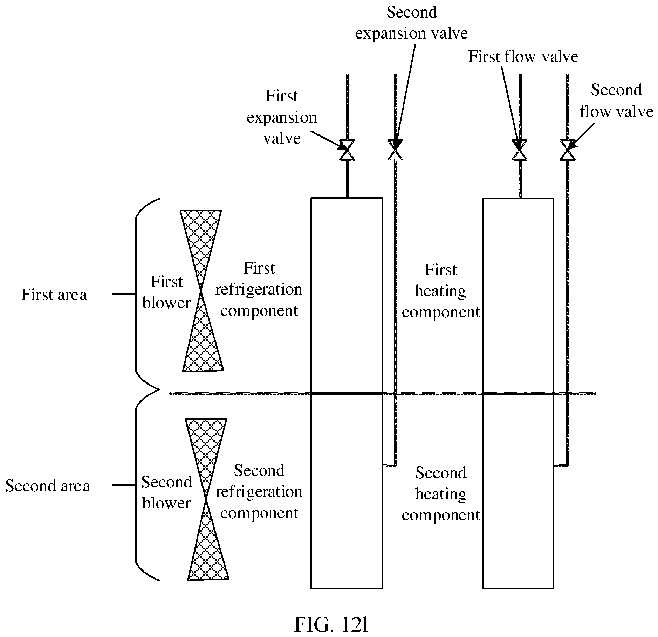

Refer to FIG. 12l. Both the first blower and the second blower are in an on state, both the first refrigeration component and the second refrigeration component are in the off state, and both the first heating component and the second heating component are in the off state. Air that is blown out from the first blower flows out from the first air outlet, and air that is blown out from the second blower flows out from the second air outlet.

In a possible implementation, a parameter of the air outlet of the air conditioning system (for example, an air volume, an air exhaust direction, and/or a temperature of the air outlet) may be set. One manner is that a user manually sets the parameter of the air outlet on a control panel of the air conditioning system. Specifically, the user can control the air conditioning system by using a knob or a button on the control panel of an air conditioning. For example, a highest air volume is level 3, a lowest air volume is level 0, and an air volume adjustment beyond the range is invalid. An air volume change may be adjusted step by step, and a temperature change may also be adjusted step by step. It may be understood that the knob or the button on the control panel may be a physical button or may be a virtual button. This is not limited in this application.

An example in which the air volume of the air outlet is controlled by using the knob is used. The control panel of the air conditioning includes a first cooling air control knob, a second cooling air control knob, a first heated air control knob, and a second heated air control knob. The first cooling air control knob and the first heated air control knob are configured to control an air volume in the first area, and the second cooling air control knob and the second heated air control knob are configured to control an air volume in the second area. For example, the operating mode of the air conditioning system is a mode in which cooling is performed on both the first area and the second area. In this case, if the first cooling air control knob is rotated right, the air volume in the first area increases. If the first cooling air control knob is rotated left, the air volume in the first area decreases. If the second cooling air control knob is rotated right, the air volume in the second area increases. If the air volume of the second cooling air control knob is rotated left, the air volume of the second area decreases.

Another manner is that a control system may automatically control the parameter of the air outlet of the air conditioning system based on information detected by a sensor (for example, a temperature that is in the cockpit and that is detected by a temperature sensor).

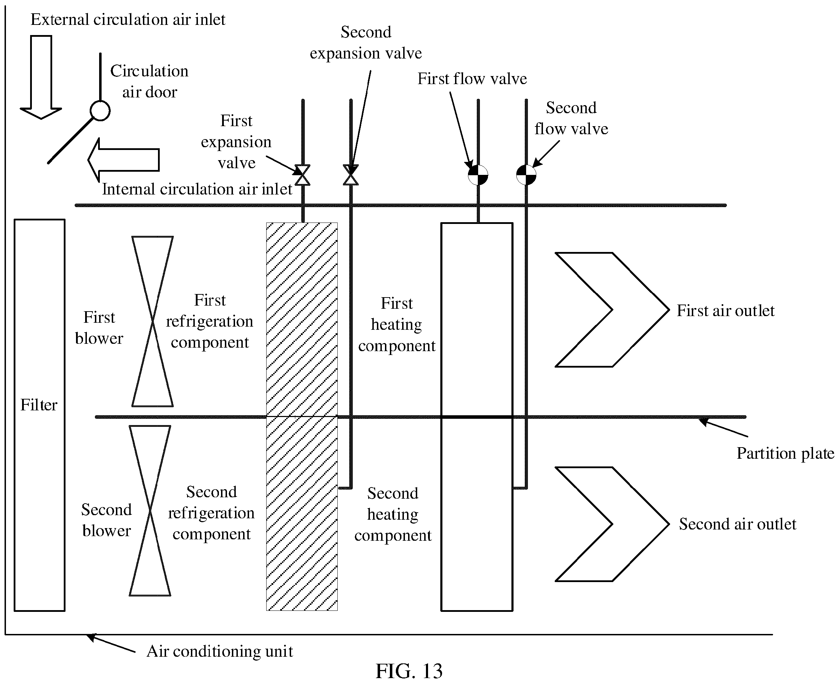

It should be noted that the air conditioning system may further include another possible functional component. For example, the air conditioning system further includes a filter and an air inlet. Refer to FIG. 13. The filter may be disposed between the air inlet of the air conditioning system and the air blowing component (including the first blower and the second blower) of the air conditioning system. For example, the filter may be a filter screen fabricated by using a cold catalyst microporous composite material, active charcoal, and/or the like. The filter may filter PM2.5 and solid particles with a diameter of more than a specific range (for example, 0.6 micrometer) in the air. The active charcoal can separate solid impurities such as dust, pollen, or abrasive particles in the air, and absorb water and harmful gases such as coal smoke, ozone, odor, carbon oxide, sulfur dioxide (SO²), or carbon dioxide (CO²) in the air, so that the air conditioning system can provide fresh air.

With reference to FIG. 13, the air inlet includes an external circulation air inlet, an internal circulation air inlet, and a circulation air door. Opening and closing of the circulation air door may be performed by an actuator, and rotation of the circulation air door may be controlled by using the actuator. In this way, the air conditioning system can implement switching between an internal circulation and an external circulation, and further implement functions such as ventilation and air exchange. When the circulation air door rotates to the external circulation air inlet, the air conditioning system is an internal circulation system. Air in a vehicle (or indoor air, or the like) enters an air conditioning unit through the internal circulation air door, and filtration is performed by the filter, to purify the air. When the circulation air door rotates to the internal circulation air inlet, the air conditioning system is an external circulation system. Air outside the vehicle (or outdoor air, or the like) enters the air conditioning unit through the external circulation air door, and enters the first area and/or the second area after filtration is performed by the filter.

Based on the foregoing described structures and function principles of the air conditioning system, this application may further provide a vehicle. The vehicle includes an air conditioning system and a control system. The control system includes but is not limited to an air conditioning controller, for example, an electronic control unit (electronic control unit, ECU). The control system can control the opening or closing, and opening information of the first control valve and the second control valve. For example, the control system may determine first opening information of the first control valve based on a temperature of the first area set by the user and an air inlet temperature that is of the first area and that is obtained through measuring, and further control the first control valve based on the first opening information of the first control valve. For the air conditioning system, refer to the descriptions in any one of the foregoing embodiments. Details are not described herein again.

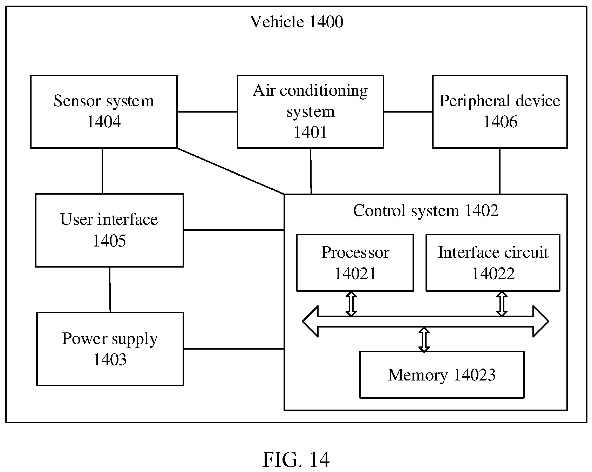

An example in which a terminal device is a vehicle is used. FIG. 14 is an example functional block diagram of a vehicle according to this application. Components coupled to the vehicle 1400 or included in the vehicle 1400 may include an air conditioning system 1401 and a control system 1402. It may be understood that a functional framework of the vehicle shown in FIG. 14 is merely an example. In another example, the vehicle 1400 may include more, fewer, or different systems, and each system may include more, fewer, or different components. In addition, the shown systems and components may be combined or divided in any manner. This is not specifically limited in this application. For example, the vehicle may further include a power supply 1403, a sensor system 1404, a user interface 1405, a peripheral device 1406, and the like. In some embodiments, the peripheral device 1406 provides a means for interaction between a user of the vehicle 1400 and the user interface 1405. For example, a touchscreen may provide information to the user of the vehicle 1400, for example, may display a self-driving mode and a manual driving mode for a driver to select. The user interface 1405 may further operate the touchscreen to receive input of the user, for example, input or select the self-driving mode or the manual driving mode. In another case, the peripheral device 1406 may provide a means for communication between the vehicle 1400 and another device located in the vehicle. For example, a microphone may receive audio (for example, a voice command or another audio input) from the user of the vehicle 1400. Similarly, a speaker may output audio to the user of the vehicle 1400. The components of the vehicle 1400 may be configured to operate in a manner of interconnection with each other and/or interconnection with other components coupled to various systems. For example, the power supply 1403 may supply power to all components of the vehicle 1400. The control system 1402 may be configured to: receive data from the sensor system 1404 and the peripheral device 1406 and control the sensor system 1404 and the peripheral device 1406.

For the air conditioning system 1401, refer to the descriptions in any one of the foregoing embodiments. Details are not described herein again.

The sensor system 1404 may include several sensors configured to sense information about an environment in which the vehicle 1400 is located and the like. For example, the sensor in the sensor system 1404 may include but is not limited to a millimeter-wave radar, a lidar and/or a vision apparatus. For functions of the millimeter-wave radar, the lidar, and the vision apparatus, refer to the foregoing related descriptions. Details are not described herein again. Further, the sensor system 1404 may further include a global positioning system (global positioning system, GPS), an inertial measurement unit (inertial measurement unit, IMU), and a brake configured to modify a position and/or an orientation of the sensor. In some embodiments, the GPS may be any sensor configured to estimate a geographical location of the vehicle 1400. Therefore, the GPS may include a transceiver that estimates a location of the vehicle 1400 relative to the earth based on satellite positioning data. In some examples, the control system 1402 may use, with reference to map data, the GPS to estimate a road on which the vehicle 1400 travels. The IMU may be configured to sense a location change and an orientation change of the vehicle 1400 based on inertial acceleration and any combination thereof. In some examples, a combination of sensors in the IMU may include an accelerometer and a gyroscope. In addition, another combination of sensors in the IMU is also possible.

It may be understood that the sensor system 1404 may further include a sensor (for example, a vehicle-mounted air quality monitor, a fuel gauge, an oil temperature gauge, and an accelerator pedal location sensor) of an internal system of the monitored vehicle 1400. Sensor data from one or more of these sensors may be used to detect an object and corresponding features (a location, a shape, a direction, a speed, and the like) of the object. Such detection and identification are key functions of a safe operation of the vehicle 1400. The sensor system 1404 may further include another sensor. This is not specifically limited in this application.

Some or all functions of the vehicle 1400 are controlled by the control system 1402. The control system 1402 may include at least one processor 14021. Further, the control system 1402 may further include an interface circuit 14022. The processor 14021 executes instructions stored in a non-transitory computer-readable medium such as a memory 14023. The control system 1402 may be alternatively a plurality of computing devices that control an individual component or a subsystem of the vehicle 1400 in a distributed manner.

The processor 14021 may be a circuit that has a signal (or data) processing capability. In an implementation, the processor may be a circuit that has an instruction reading and running capability, for example, a central processing unit (central processing unit, CPU), a microprocessor, a graphics processing unit (graphics processing unit, GPU) (which may be understood as the microprocessor), or a digital signal processor (digital signal processor, DSP). In another implementation, the processor may implement a specific function by using a logical relationship of a hardware circuit. The logical relationship of the hardware circuit is fixed or may be reconstructed. For example, the processor is a hardware circuit, for example, a field programmable gate array (field programmable gate array, FPGA), implemented by an application-specific integrated circuit (application-specific integrated circuit, ASIC) or a programmable logic device (programmable logic device, PLD). In a reconfigurable hardware circuit, a process in which the processor loads a configuration document to implement a hardware circuit configuration may be understood as a process in which the processor loads instructions to implement functions of some or all of the foregoing units. In addition, the processor may alternatively be a hardware circuit designed for artificial intelligence, and may be understood as the ASIC, for example, a neural network processing unit (neural network processing unit, NPU), a tensor processing unit (tensor processing unit, TPU), or a deep learning processing unit (deep learning processing unit, DPU). For example, the processor may alternatively be an application processor (application processor, AP), an image signal processor (image signal processor, ISP), or another programmable logic component, a transistor logic component, a hardware component, or any combination thereof.

Although FIG. 14 functionally illustrates the processor, the memory, and another component of the control system 1402 in a same block, a person of ordinary skill in the art should understand that the processor or the memory may actually include a plurality of processors or memories that are not stored in a same physical housing. For example, the memory may be a hard disk drive or another storage medium located in a housing different from a housing of the control system 1402. For another example, the processor may alternatively be far away from the vehicle but may perform wireless communication with the vehicle.

In some embodiments, the memory 14023 may include instructions (for example, program logic), and the instructions may be read by the processor 14021 to perform various functions of the vehicle 1400, including the functions described above. The memory 14023 may also include additional instructions, including instructions for sending data to, receiving data from, interacting with, and/or controlling one or more of the sensor system 1404, the control system 1402, and the peripheral device 1406. In addition to the instructions, the memory 14023 may further store data, for example, a road map, route information, data detected by the sensor, vehicle data such as a location, a direction, and a speed, and other information of the vehicle. Such information may be used by the vehicle 1400 and the control system 1402 when the vehicle 1400 is in an autonomous mode, a semi-autonomous mode, and/or a manual mode.

For example, the memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. In another example, the storage medium may alternatively be a component of the processor. The processor and the storage medium may be disposed in the ASIC. In addition, the ASIC may be located in the control system. Certainly, the processor and the storage medium may exist in the control system as discrete components.

The control system 1402 can control functions of the vehicle 1400 based on inputs received from various subsystems (for example, the sensor system 1404) and from the user interface 1405. For example, the control system 1402 can control acceleration or deceleration of the vehicle by using an input from the sensor system 1404, to avoid an obstacle detected by an obstacle avoidance system. In some embodiments, the control system 1402 may operate to provide control over many aspects of the vehicle 1400 and the subsystems of the vehicle 1400.

Optionally, one or more of the foregoing components may be separately installed from or associated with the vehicle 1400. For example, the memory 14023 may be partially or completely separated from the vehicle 1400. The foregoing components may be communicatively coupled together in a wired and/or wireless manner.

For example, the vehicle 1400 may be a pure electric vehicle, a hybrid electric vehicle, a range extended electric vehicle, a plug-in hybrid electric vehicle, another new energy vehicle, a fossil fuel vehicle, or the like.

It should be noted that "connected" in embodiments of this application may be directly connected. Optionally, in another possible case, "connected" may alternatively not be directly connected, but connected through some elements. This is not limited in embodiments of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "uniformity" does not mean absolute uniformity, and a specific engineering error may be allowed. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural. In the text descriptions of this application, the character "/" usually indicates an "or" relationship between associated objects. In a formula of this application, the character "/" indicates a "division" relationship between associated objects. In addition, in this application, the term "for example" represents giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that, in this application, various numeric numbers are distinguished merely for ease of description and are not used to limit the scope of embodiments of this application. Sequence numbers of the foregoing processes do not mean execution sequences. The execution sequences of the processes should be determined based on functions and internal logic of the processes. The terms "first", "second", and the like are used to distinguish between similar objects but do not necessarily indicate a specific order or sequence. In addition, the terms "include", "have", and any variant thereof are intended to cover non-exclusive inclusion, for example, include a series of steps or units. A method, a system, a product, or a device is not necessarily limited to those steps or units that are expressly listed, but may include other steps or units that are inherent to the process, the method, the system, the product, or the device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An air conditioning system, comprising a first refrigeration component, a second refrigeration component, a first heating component, a second heating component, a first control valve, and a second control valve, wherein
the first control valve is configured to control cooling performed by the first refrigeration component and the second refrigeration component;
the second control valve is configured to control heating performed by the first heating component and the second heating component; and
the air conditioning system comprises a first area and a second area, wherein the first area comprises the first refrigeration component and the first heating component, the second area comprises the second refrigeration component and the second heating component, and a partition plate is disposed between the first area and the second area.

2. The system according to claim 1, wherein the first refrigeration component and the second refrigeration component are integrated, and/or the first heating component and the second heating component are integrated.

3. The system according to claim 2, wherein the first refrigeration component and the second refrigeration component that are integrated and the first heating component and the second heating component that are integrated are arranged side by side.

4. The system according to any one of claims 1 to 3, wherein an operating mode of the air conditioning system comprises any one of the following:
both the first refrigeration component and the second refrigeration component are in a cooling state, and both the first heating component and the second heating component are in an off state;
both the first refrigeration component and the second refrigeration component are in an off state, and both the first heating component and the second heating component are in a heating state;
both the first refrigeration component and the second refrigeration component are in a cooling state, and both the first heating component and the second heating component are in a heating state;
the first refrigeration component is in a cooling state, the second refrigeration component is in an off state, the first heating component is in an off state, and the second heating component is in a heating state;
both the first refrigeration component and the second refrigeration component are in a cooling state, the first heating component is in a heating state, and the second heating component is in an off state;
the first refrigeration component is in a cooling state, the second refrigeration component is in an off state, and both the first heating component and the second heating component are in an off state; or
both the first refrigeration component and the second refrigeration component are in an off state, the first heating component is in a heating state, and the second heating component is in an off state.

5. The system according to any one of claims 1 to 4, wherein the first control valve comprises a first expansion valve and a second expansion valve, wherein
a first port of the first expansion valve is connected to the first refrigeration component, a second port of the first expansion valve is connected to a cold source, a first port of the second expansion valve is connected to the second refrigeration component, and a second port of the second expansion valve is configured to connect to the cold source.

6. The system according to any one of claims 1 to 5, wherein the second control valve comprises a first flow valve and a second flow valve, wherein
a first port of the first flow valve is connected to the first heating component, a second port of the first flow valve is configured to connect to a heat source, a first port of the second flow valve is connected to the second heating component, and a second port of the second flow valve is configured to connect to the heat source.

7. The system according to any one of claims 1 to 4 or claim 6, wherein the first control valve comprises a first three-way valve, wherein
a first port of the first three-way valve is connected to the first refrigeration component, a second port of the first three-way valve is connected to the second refrigeration component, and a third port of the first three-way valve is configured to connect to the cold source.

8. The system according to any one of claims 1 to 5, wherein the second control valve comprises a second three-way valve, wherein
a first port of the second three-way valve is connected to the first heating component, a second port of the second three-way valve is connected to the second heating component, and a third port of the second three-way valve is configured to connect to a heat source.

9. The system according to any one of claims 1 to 8, wherein the first refrigeration component comprises a first inlet, a first outlet, and at least one first duct, one end of the first duct is connected to the first inlet, and the other end of the first duct is connected to the first outlet; and
the second refrigeration component comprises a second inlet, a second outlet, and at least one second duct, one end of the second duct is connected to the second inlet, and the other end of the second duct is connected to the second outlet.

10. The system according to any one of claims 1 to 9, wherein the first heating component comprises a third inlet, a third outlet, and at least one third duct, one end of the third duct is connected to the third inlet, and the other end of the third duct is connected to the third outlet; and
the second heating component comprises a fourth inlet, a fourth outlet, and at least one fourth duct, one end of the fourth duct is connected to the fourth inlet, and the other end of the fourth duct is connected to the fourth outlet.

11. The system according to any one of claims 1 to 10, wherein the first area further comprises a first blower, and the second area further comprises a second blower, wherein
the first blower is configured to adjust an air volume of the first area; and
the second blower is configured to adjust an air volume of the second area.

12. The system according to claim 11, wherein the first refrigeration component is located between the first blower and the first heating component; and/or
the second refrigeration component is located between the second blower and the second heating component.

13. The system according to claim 11 or 12, wherein the operating mode of the air conditioning system comprises any one of the following:
both the first blower and the second blower are in an on state, both the first refrigeration component and the second refrigeration component are in a cooling state, and both the first heating component and the second heating component are in an off state;
both the first blower and the second blower are in an on state, both the first refrigeration component and the second refrigeration component are in an off state, and both the first heating component and the second heating component are in a heating state;
both the first blower and the second blower are in an on state, both the first refrigeration component and the second refrigeration component are in a cooling state, and both the first heating component and the second heating component are in a heating state;
both the first blower and the second blower are in an on state, both the first refrigeration component and the second refrigeration component are in an off state, and the first heating component and the second heating component are in an off state;
both the first blower and the second blower are in an on state, the first refrigeration component is in an off state, the second refrigeration component is in a cooling state, the first heating component is in a heating state, and the second heating component is in an off state;
both the first blower and the second blower are in an on state, both the first refrigeration component and the second refrigeration component are in a cooling state, the first heating component is in a heating state, and the second heating component is in an off state;
the first blower is in an on state, the second blower is in an off state, the first refrigeration component is in a cooling state, the second refrigeration component is in an off state, and both the first heating component and the second heating component are in an off state; or
the first blower is in an on state, the second blower is in an off state, both the first refrigeration component and the second refrigeration component are in an off state, the first heating component is in a heating state, and the second heating component is in an off state.

14. A vehicle, comprising a control system and the air conditioning system according to any one of claims 1 to 13, wherein
the control system is configured to control running of the air conditioning system.

15. A refrigeration apparatus, comprising a first refrigeration component and a second refrigeration component that are integrated, wherein
the first refrigeration component comprises a first inlet, a first outlet, and at least one first duct, one end of the first duct is connected to the first inlet, and the other end of the first duct is connected to the first outlet; and the second refrigeration component comprises a second inlet, a second outlet, and at least one second duct, one end of the second duct is connected to the second inlet, and the other end of the second duct is connected to the second outlet.

16. The apparatus according to claim 15, wherein the first inlet is embedded in the second inlet, and the first inlet is isolated from the second inlet, and/or
the first outlet is embedded in the second outlet, and the first outlet is isolated from the second outlet.

17. The apparatus according to claim 15 or 16, wherein the first refrigeration component comprises a plurality of first ducts, and the plurality of first ducts are arranged in parallel; and/or
the second refrigeration component comprises a plurality of second ducts, and the plurality of second ducts are arranged in parallel.
